(19) Europäisches Patentamt
European Patent Office
Office européen des brevets

(11) **EP 3 150 289 A2**

(12) **EUROPEAN PATENT APPLICATION**

(43) Date of publication:
**05.04.2017 Bulletin 2017/14**

(51) Int Cl.:
**B05D 5/04** (2006.01)          **B05D 1/28** (2006.01)
**B05D 5/02** (2006.01)

(21) Application number: **16191637.4**

(22) Date of filing: **30.09.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.09.2015   JP 2015193913**
**30.09.2015   JP 2015193914**
**30.09.2015   JP 2015193915**
**30.09.2015   JP 2015193916**

(71) Applicant: **Toto Ltd.**
**Kitakyushu-shi, Fukuoka 802-8601 (JP)**

(72) Inventors:
• **SHICHI, Tetsuya**
**Kokurakita-ku, Kitakyushu-shi, Fukuoka 802-8601 (JP)**
• **IKEDO, Mami**
**Kokurakita-ku, Kitakyushu-shi, Fukuoka 802-8601 (JP)**
• **KATAOKA, Kyoko**
**Kokurakita-ku, Kitakyushu-shi, Fukuoka 802-8601 (JP)**

(74) Representative: **ABG Patentes, S.L.**
**Avenida de Burgos, 16D**
**Edificio Euromor**
**28036 Madrid (ES)**

(54) **METHOD FOR FORMING A COATING FILM AND A FUNCTIONAL MEMBER COMPRISING THE COATING FILM**

(57)     Provided is a method for readily forming a coating film on a surface of a substrate, that has an excellent applicability and is uniform or homogenous and has a good appearance. The present invention is a method for forming a coating film on a surface of a substrate. The method comprises the steps of: applying an aqueous coating composition to a surface of the substrate to form a liquid film, and drying the liquid film to form a dry film. The liquid film has a fine concave-convex shape including a plurality of convex parts and a plurality of concave parts. In the step of forming the dry film, the liquid film is dried to form the dry film in which the fine concave-convex shape of the liquid film is conserved.

Fig. 2

EP 3 150 289 A2

**Description**

FIELD OF INVENTION

The present invention relates to a method for forming a coating film which the coating film that has an excellent applicability and is uniform or homogenous and has a good appearance can be readily formed on a surface of a substrate; and to a functional member including a substrate and a coating film formed on a surface of the substrate, the coating film being uniform or homogeneous and having a good appearance.

BACKGROUND ART

One method for forming a coating film on a surface of a substrate involves a use of an aqueous coating composition in which water is included as a dispersion medium. Generally, the aqueous coating composition is prone to be low in a surface tension and a viscosity as compared with a non-aqueous coating composition in which a solvent is included as a dispersion medium. Therefore, the aqueous coating composition gives excellent leveling property (i.e., a property of easily spreading out on a surface of a substrate with wetting). At the time of an on-site application, if the aqueous coating composition having a high leveling property like this is applied to a wide surface such as a wall surface, or to a substrate having a vertical plane or an inclined plane, there is a tendency to cause a poor appearance such as a liquid drip and an uneven coating, so that there is a case that a uniform coating film cannot be formed readily. Especially if the aqueous coating composition is applied to a transparent substrate such as a glass, a poor appearance happens more frequently, so that formation of a uniform coating film becomes more difficult. In order to reduce such troubles in the on-site application, there is a real situation that a worker is requested to have a high skill of coating; and thus, a novel improved coating technology has been still required.

WO98/003607 (Patent Literature 1) discloses that a coating composition can be uniformly applied to a surface of a substrate by adding a surfactant to the composition. JP H10-337526 A (Patent Literature 2) discloses that a coating composition is applied after a dirt attached to a surface of an existing substrate is washed out. It also discloses that by adding a surfactant to the coating composition, a wettability to the surface of the substrate can be enhanced.

JP 2000-246115 A (Patent Literature 3) discloses a photocatalytic member having a photocatalytic coating film on a surface of a substrate which is formed, for example, in a discontinuous form, preferably in an island form, under a state of substantially uniform dispersion of a coating composition. It is reported that this photocatalytic member can perform a photocatalytic function satisfactorily well even under an environment where a substrate can readily undergo expansion or shrinkage due to a weather change and the like.

However, a method has yet been demanded with which an excellent coating film that is uniform and has a good appearance can be readily formed without requiring a high application skill on a surface of a substrate such as a wall surface to which application of an aqueous coating composition is difficult.

CITED REFERENCES

Patent Literatures

        Patent Literature 1: WO98/003607
        Patent Literature 2: JP H10-337526 A
        Patent Literature 3: JP 2000-246115 A

SUMMARY OF THE INVENTION

Inventors of the present invention have this time found that when a liquid film having a fine concave-convex shape on a surface of a substrate is formed, and the liquid film is dried in such a way that the fine concave-convex shape can be conserved to form a dry film, a coating film that has an excellent applicability and is uniform or homogenous and has a good appearance can be readily formed on a surface of a substrate. The present invention has been achieved on the basis of the finding.

Accordingly, the present invention has an object to provide a method with which a coating film that has an excellent applicability and is uniform or homogenous and has a good appearance can be readily formed on a surface of a substrate. The present invention also has an object to provide a functional member including a substrate and a coating film formed on a surface of the substrate, the coating film being uniform or homogeneous and having a good appearance.

Namely, the present invention is a method for forming a coating film on a surface of a substrate, comprising the steps of:

applying an aqueous coating composition to the surface of the substrate to form a liquid film, and
drying the liquid film to form a dry film, wherein
the liquid film has a fine concave-convex shape including a plurality of convex parts and a plurality of concave parts, and
in the step of forming the dry film, the liquid film is dried to form the film in which the fine concave-convex shape of the liquid film is conserved.

Further, the present invention is a functional member containing a substrate and a coating film formed on a surface of the substrate, wherein the coating film has a fine concave-convex shape including a plurality of convex parts and a plurality of concave parts.

According to the method for forming a coating film of the present invention, even under an environment in which application of an aqueous coating composition to a substrate is difficult, without executing a special treatment to the aqueous coating composition and/or to the substrate, with controlling a shape of a liquid film formed by the aqueous coating composition so as to be a fine concave-convex shape, a film having the shape of the liquid film conserved therein can be readily formed. In the present invention, a liquid film having a fine concave-convex shape is formed, and the liquid film is dried with conserving the fine concave-convex shape, and consequently a coating film which is homogeneous and has an excellent appearance can be obtained. It is considered that because the liquid film has the fine concave-convex shape, this shape is conserved not only in the liquid film during drying but also in the film after drying. Due to the conservation of this shape, a coating film that is uniform and has an excellent appearance can be readily formed without requiring a high application skill. Specifically, a uniform coating film without a recognizable poor appearance such as a liquid drip, an uneven coating, and a coating line can be readily formed without requiring a high application skill on a substrate having a larger area than a window glass, e.g., on a wall surface, or on a substrate having a vertical plane or an inclined plane, or on these substrates having transparency. Further, a uniform coating film without a recognizable poor appearance such as a uneven coating and a coating line can be readily formed without requiring a high application skill, when an on-site application is carried out under an environment in which a drying time of the liquid film is short due to a high temperature such as in a summer season. Also, a uniform coating film without a recognizable poor appearance such as a liquid drip can be readily formed without requiring a high application skill, when an on-site application is carried out under an environment in which a drying time of the liquid film is long due to a low temperature such as in a winter season. In addition, an excellent applicability like this can be performed and kept stably.

BRIEF DESCRIPTION OF THE DRAWINGS

Fig. 1 is a flow chart of the method for forming a coating film according to the present invention.
Fig. 2 (a) is a schematic drawing illustrating a liquid film and a dry film which are formed by the method for forming a coating film according to the present invention; and Fig. 2 (b) is a schematic drawing illustrating a liquid film and a dry film which are formed by a conventional method for forming a coating film.
Fig. 3 is a schematic drawing illustrating an embodiment wherein a liquid film is formed by applying an aqueous coating composition to a surface of a substrate with rolling a sponge roller.
Fig. 4a is a photograph of a liquid film formed by the method for forming a coating film according to the present invention.
Fig. 4b is a photograph of a film formed by drying the liquid film shown in Fig. 4 (a).
Fig. 5a is a photograph of another liquid film formed by the method for forming a coating film according to the present invention.
Fig. 5b is a photograph of a film formed by drying the liquid film shown in Fig. 5 (a).
Fig. 6a is a photograph of a liquid film formed by a method for forming a coating film not belonging to the present invention.
Fig. 6b is a photograph of a film formed by drying the liquid film shown in Fig. 6 (a).
Fig. 7 is a photograph of a film formed by the method for forming a coating film according to the present invention.
Fig. 8 is a photograph of a film formed by the method for forming a coating film according to the present invention.
Fig. 9 is a photograph of a film formed by the method for forming a coating film according to the present invention.
Fig. 10 is a photograph of a film formed by the method for forming a coating film according to the present invention.
Fig. 11 is a photograph of a film formed by a method for forming a coating film not belonging to the present invention.
Fig. 12 is a photograph of a film formed by the method for forming a coating film according to the present invention.

Fig. 13 is a photograph of a film formed by a method for forming a coating film not belonging to the present invention.
Fig. 14 is a photograph of a film formed by a method for forming a coating film not belonging to the present invention.
Fig. 15 is a photograph of a film formed by a method for forming a coating film not belonging to the present invention.
Fig. 16 is a photograph of a film formed by a method for forming a coating film not belonging to the present invention.
Fig. 17 is a photograph of a film formed by the method for forming a coating film according to the present invention.

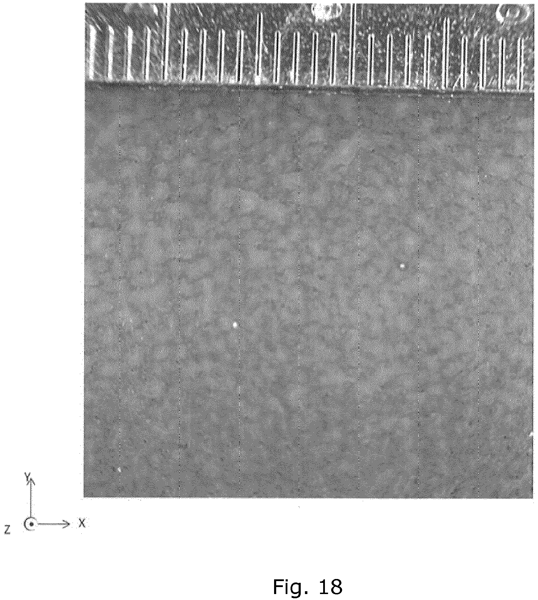

Fig. 18 is a photograph of a film formed by the method for forming a coating film according to the present invention.
Fig. 19 is a photograph of a film formed by the method for forming a coating film according to the present invention.
Fig. 20 is a photograph of a film formed by the method for forming a coating film according to the present invention.
Fig. 21 is a photograph of a film formed by the method for forming a coating film according to the present invention.
Fig. 22 is a photograph of a film formed by the method for forming a coating film according to the present invention.
Fig. 23 is a photograph of a film formed by the method for forming a coating film according to the present invention.
Fig. 24 is a photograph of a film formed by a method not belonging to the present invention for forming a coating film.
Fig. 25 is a photograph of a film formed by a method for forming a coating film not belonging to the present invention.
Fig. 26 is a photograph of a film formed by a method for forming a coating film not belonging to the present invention.
Fig. 27 is a photograph of a film formed by a method for forming a coating film not belonging to the present invention.
Fig. 28 is a photograph of a film formed by a method for forming a coating film not belonging to the present invention.
Fig. 29 is a photograph of a film formed by a method for forming a coating film not belonging to the present invention.
Fig. 30 shows surface shape profiles of the films 37 to 41 obtained by observation with a digital holographic microscope.
Fig. 31 shows surface shape profiles of the films 42 to 46 obtained by observation with a digital holographic microscope.

## DETAILED DESCRIPTION OF THE INVENTION

Method for forming a coating film

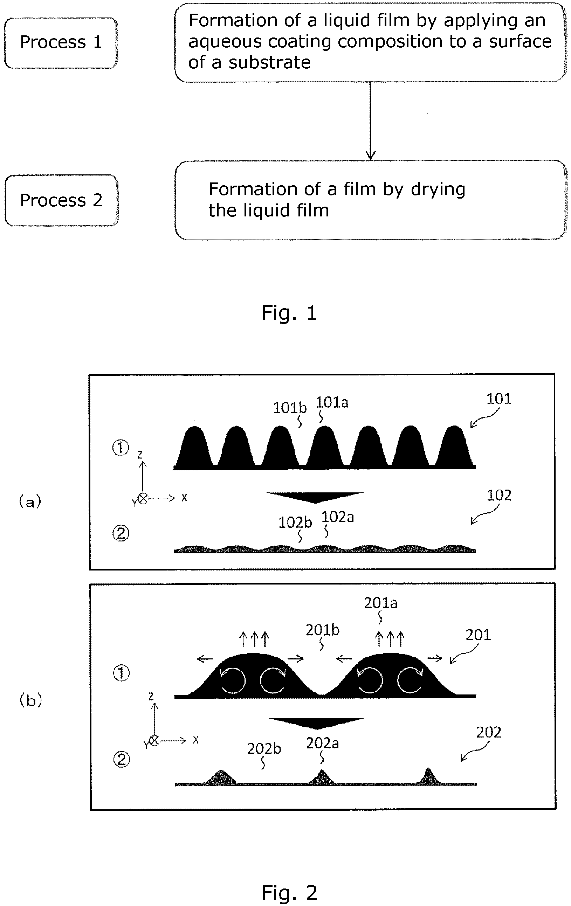

Fig. 1 is a flow chart of the method for forming a coating film according to the present invention. The method for forming a coating film according to the present invention includes, as illustrated in Fig. 1, at least a step of forming a liquid film by applying an aqueous coating composition to a surface of a substrate (step 1) and a step of forming a dry film by drying the liquid film (step 2).

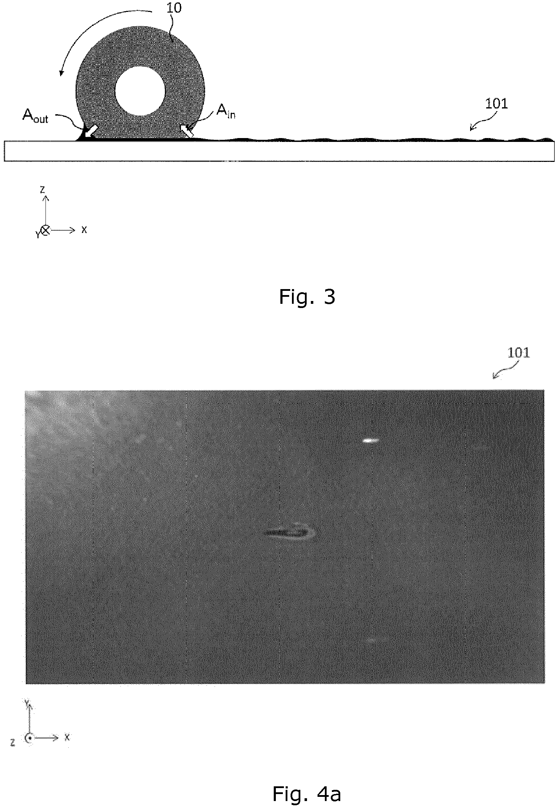

With referring to Fig. 2 and Fig. 3, the steps shown in the flow chart of Fig. 1 will be explained in detail. Fig. 2 (a) is a schematic drawing illustrating a liquid film and a dry film which are formed by the method for forming a coating film according to the present invention. Fig. 2 (b) is a schematic drawing illustrating a liquid film and a dry film which are formed by a conventional method for forming a coating film. Fig. 3 is a schematic drawing illustrating an embodiment wherein a liquid film is formed by applying an aqueous coating composition to a surface of a substrate with rolling a sponge roller.

Forming a liquid film (step 1)

In the method for forming a coating film according to the present invention, first, an aqueous coating composition is applied to a surface of a substrate to form a liquid film.

Liquid film

In the present invention, a liquid film is a film formed after an aqueous coating composition is applied to a surface of a substrate, and is a film in a wet state before start of drying. As illustrated in Fig. 2 (a), a liquid film 101 has a fine concave-convex shape including a plurality of convex part 101a and a plurality of concave part 101b. With regard to the fine concave-convex shape, for example, a state in which a plurality of convex part 101a and a plurality of concave part 101b exist uniformly over the entire surface of the substrate may be mentioned. For example, a state in which a plurality of convex part 101a and a plurality of concave part 101b are distributed regularly and alternately in both a longitudinal direction and a lateral direction on surface of the substrate may be mentioned.

It must be herein noted that a lamination direction (vertical direction), i.e., a direction from the substrate to the liquid film, is regarded as a Z-axis direction; a direction perpendicular to the Z-axis direction is regarded as a X-axis direction; and a direction perpendicular to both the Z-axis direction and the X-axis direction is regarded as a Y-axis direction. The diameter of the convex part 101a is a distance between two neighboring convex parts 101a in an X-Y plane, i.e., in a surface of the liquid film 101. The thickness of the convex part 101a is a length of the convex part 101a along the Z-axis direction.

The fine concave-convex shape of the liquid film 101 is, when a surface (X-Y plane) of the liquid film 101 is observed, preferably in a fine net-like shape or a scale-like shape, while the scale-like shape is more preferable. In such a case that an amount of a coating composition included in the liquid film 101 per unit volume is smaller than a prescribed value, or that a surface tension or a viscosity of a coating composition is larger than a prescribed value, the liquid film 101 having a fine concave-convex shape, particularly a fine net-like shape or a scale-like shape can be formed. On the other hand, in such a case that an amount of the coating composition included in the liquid film 101 per unit volume is larger than a prescribed value, or that a surface tension or a viscosity of the coating composition is smaller than a prescribed value, it is difficult to form the liquid film 101 having a fine concave-convex shape, for example, a fine net-like shape or a scale-like shape. Further, even if the liquid film 101 having these fine concave-convex shapes can be formed, there is a possibility that these fine concave-convex shapes cannot be conserved during drying that will be discussed later. In this case, an uneven coating or the like disadvantageously is recognizable in the appearance of the film after drying.

According to the present invention, the liquid film 101 has a fine concave-convex shape, and this shape can be conserved both in the liquid film during drying and in the dry film 102 after drying; and thus, an excellent coating film that is uniform and has a good appearance can be readily formed without requiring a high application skill.

Forming a dry films (step 2)

In the method for forming a coating film according to the present invention, next, the liquid film formed in the step 1 is dried to form a dry film. The dry film is formed by drying the liquid film in such a way that the fine concave-convex shape possessed by the liquid film can be conserved. Namely, the dry film is formed by drying the liquid film with conserving the fine concave-convex shape possessed by the liquid film. The dry film formed in this way conserves this concave-convex shape thereafter, too. Namely, the fine concave-convex shape possessed by the liquid film is conserved both in the liquid film during drying and in the dry film after drying. Conservation of this shape contributes to forming a favorable coating film. It is considered that the following phenomena occur as a mechanism to conserve the fine concave-convex shape.

For example, as illustrated in Fig. 2 (a), it is considered that while the liquid film 101 is dried, a phenomenon that the fine concave-convex shape possessed by the liquid film 101 hardly changes occurs except that the height of the convex part 101a included in the fine concave-convex shape becomes smaller as a dispersion medium evaporates. Namely, in this phenomenon, when comparison is made between the fine concave-convex shape before drying (101a and 101b) and the fine concave-convex shape after drying (102a and 102b) in a two-dimensional (planar) manner, the positions of the convex parts (101a and 102a) and the concave parts (101b and 102b) hardly change in the both shapes or states. It is also considered that a phenomenon occurs that the convex part 101a does not flow (the convex part does not spread to a longitudinal direction and/or a lateral direction with wetting), thereby the original shape of the convex part 101a as well as the position thereof on a surface of the substrate hardly changes. Further, it is considered that a phenomenon occurs that the convex part 101a does not flow, thereby it does not contact with a neighboring convex part 101a so that the original shape of the convex part 101a, the position thereof on a surface of the substrate, and the number (density) of the convex part 101a present on a surface of the substrate hardly change. Consequently, in the step 2, the dry film 102 having the fine concave-convex shape reflecting the fine concave-convex shape of the liquid film 101 is formed.

Dry film

In the present invention, the dry film 102 means a film which is in a state after the liquid film 101 is dried. In the dry film 102, the fine concave-convex shape possessed by the liquid film 101 is conserved. Therefore, in the dry film 102, it is difficult to recognize a poor appearance such as an uneven coating. Also, an occurrence of a defect such as a liquid drip can be suppressed. The shape of the film 102 in the state that the fine concave-convex shape possessed by the liquid film 101 is conserved is preferably a fine net-like shape or a scale-like shape, while the scale-like shape is more preferable.

As illustrated in Fig. 3, in an on-site application, the liquid film 101 is formed by applying an aqueous coating composition to a surface of the substrate by means of, for example, a roller 10. For example, the aqueous coating composition which is oozed out by pressing the roller 10 onto the surface of the substrate is spread out by the roller to form the liquid film. At this time, in accordance with various conditions including a material of the roller and physical properties of the aqueous coating composition, the liquid film having the concave-convex shape including a thick convex part (for example, a convex part 101a) and a thin concave part (for example, a concave part 101b) is formed.

Generally, an aqueous coating composition having a high leveling property is preferably used so that a uniform liquid film and a uniform dry film can be formed by spreading out the composition with wetting after application of the composition to a substrate. According to the experiments performed by inventors of the present invention, following phenomena were confirmed. Namely, when a liquid film 201 including a convex part 201a which is thick and has a large diameter, as illustrated in Fig. 2 (b), is formed by applying the aqueous coating composition having a high leveling property to the substrate, after the application of the composition, a force of spreading out with wetting toward a concave part 201b is generated to cause, for example, an adhesion of two neighboring convex parts 201a during drying, and as a result, a convex part 202a having a large size is formed unevenly in the film 202. Here, that a convex part 202a is formed unevenly means both that the size of the convex part 202a itself is not even and that the convex part 202a is disposed unevenly in the film 202. The convex part 202a that is formed unevenly is recognized as a poor appearance such as an uneven coating.

Further, as illustrated in Fig. 2 (b), in the liquid film 201 having an irregular concave-convex shape which is not fine, the convex part 201a spreads out with wetting during drying to cause an adhesion of two neighboring convex parts 201a, resulting in a formation of a film 202 having a convex part 202a newly formed. In addition, the liquid included in the convex part 201a is spread out with wetting to cause a formation of a flat concave part 202b in the film 202 in a position different from that of the concave part 201b in the liquid film 201; and thereby, the height of the convex part 202a becomes relatively higher. Also, the disposition of the convex part 202a in the film 202 becomes irregular. Further, because the liquid film 201 unevenly spreads out with wetting, the variance of the height of the convex part 202a becomes large. These phenomena are recognized as a poor appearance such as the uneven coating in the film 202.

On the other hand, according to the present invention, the occurrence of the phenomena as described above can be suppressed. For example, in the present invention, ingenuity is made such that the liquid film 101 having a fine concave-convex shape (101a and 101b) can be formed by an aqueous coating composition, while the convex part 101a cannot spread out with wetting toward a direction of the concave part 101b after application of the composition. Accordingly, in the liquid film 101, adhesion of two neighboring convex parts 101a with each other is suppressed during drying. As a result, the fine concave-convex shape possessed by the liquid film 101 is conserved both in the liquid film during drying and in the dry film after drying. The fine concave-convex shape possessed by the film 102 which is formed in this way is hardly recognizable, so that the film 102 has an excellent appearance.

In the present invention, the thickness of the film 102 is preferably, for example, in the range of 10 nm or more to 200 nm or less, while more preferably in the range of 10 nm or more to 150 nm or less. When the film thickness is 10 nm or more, in the case when the film includes a photocatalyst, the effect of the photocatalyst can be performed sufficiently well. When the film thickness is 200 nm or less, even if a thick convex part 101a is uniformly formed in the liquid film 101, an uneven coating of the film is difficult to be recognized, in addition, a transparency of the film is excellent.

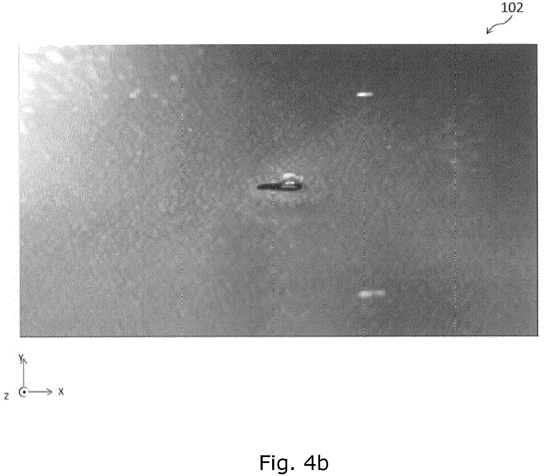

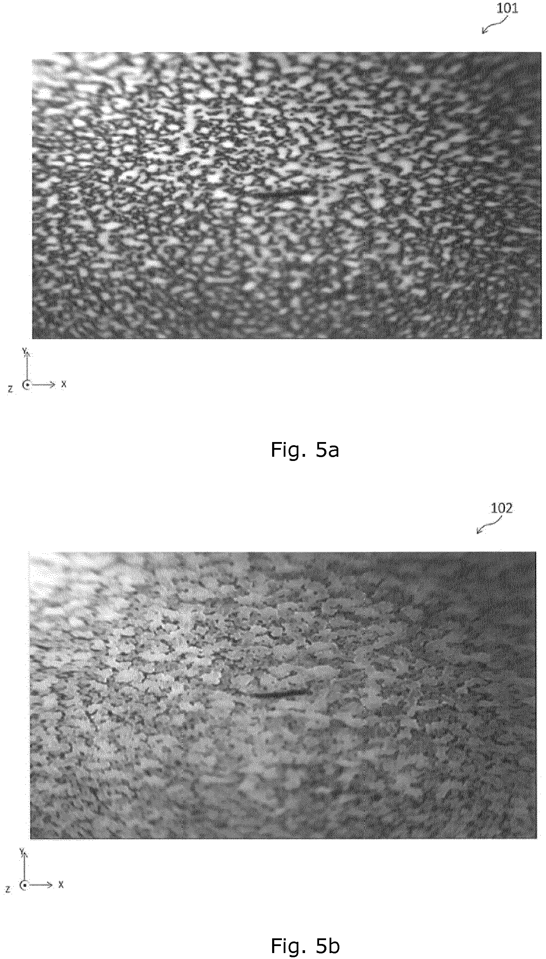

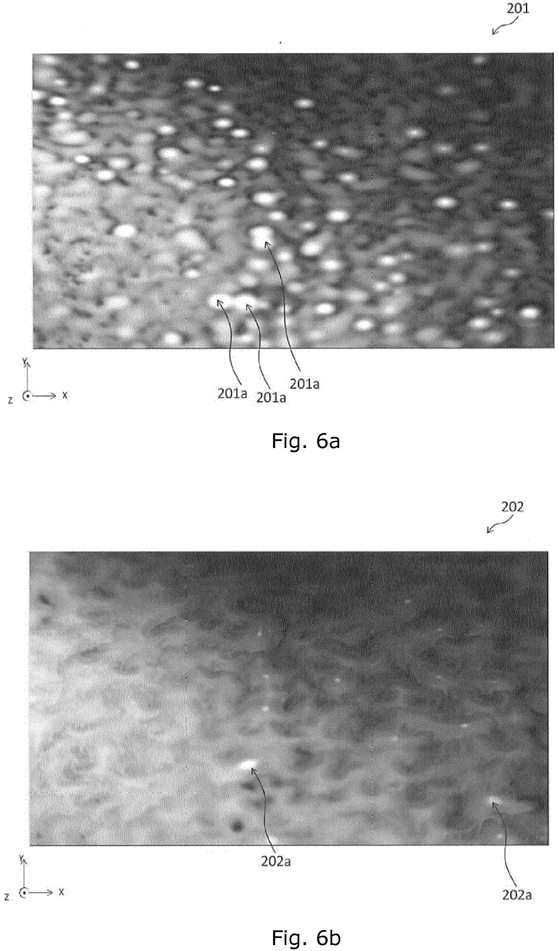

The method for forming a coating film according to the present invention will be further explained with referring to Fig. 4 to Fig. 6. Fig. 4 (a) is a photograph of a liquid film formed by the method for forming a coating film according to the present invention. Fig. 4 (b) is a photograph of a film formed by drying the liquid film shown in Fig. 4 (a). Fig. 5 (a) is a photograph of another liquid film formed by the method for forming a coating film according to the present invention. Fig. 5 (b) is a photograph of a film formed by drying the liquid film shown in Fig. 5 (a). Fig. 6 (a) is a photograph of a liquid film formed by a method for forming a coating film not belonging to the present invention. Fig. 6(b) is a photograph of a film formed by drying the liquid film shown in Fig. 6 (a). Meanwhile, a black mark in the center of the photograph is a mark to adjust the focus during the time of taking the photograph.

As can be seen in Fig. 4 (a), the liquid film 101 has a fine concave-convex shape with a scale-like shape when the surface thereof is observed. Also as can be seen in Fig. 4 (b), the film 102 which is formed by drying the liquid film 101 has a fine concave-convex shape with a scale-like shape as well. Namely, as can be seen in Fig. 4 (a) and (b), according to the method for forming a coating film of the present invention, the film 102 which conserves the fine concave-convex shape formed in the liquid film 101 can be formed. In the film 102 having the fine concave and convex with the scale-like shape, an uneven coating and so forth are not recognized, so that the film has an excellent appearance.

As can be seen in Fig. 5 (a), the liquid film 101 has a fine concave-convex shape with a net-like shape when the surface thereof is observed. Also as can be seen in Fig. 5 (b), the film 102 which is formed by drying the liquid film 101 has a fine concave-convex shape with a net-like shape as well. Namely, as can be seen in Fig. 5 (a) and (b), according to the method for forming a coating film of the present invention, the film 102 which conserves the fine concave-convex shape formed in the liquid film 101 can be formed. In the film 102 having the fine concave and convex with the net-like shape, an uneven coating and so forth are not readily recognizable, so that the film has an excellent appearance.

Meanwhile, in the film 102 shown in Fig. 5, parts of the neighboring convex parts are adhered with one another in some cases, however, as a whole, the fine concave-convex shape of the liquid film 101 is conserved in the film 102 as well, so that the film 102 has an excellent appearance. Also, in the liquid film 101 shown in Fig.5, the convex part 101a is larger than that of, for example, the liquid film 101 shown in Fig. 4 (a), and thus, this part has a whitish appearance. These convex parts shown in Fig. 5 are disposed uniformly in the liquid film 101, and the relative difference in the thicknesses between the concave part and the convex part thereof is small, and thus, these convex parts are not easily recognizable as an uneven coating in the film 102, too.

On the other hand, as can be seen in Fig. 6 (a), the liquid film 201, when the surface thereof is observed, does not have a fine concave-convex shape, and in addition, the relative difference in the thicknesses between a concave part and a convex part thereof is large. Also, the thick parts (convex parts 201a) of the liquid film are disposed irregularly.

Further, as can be seen in Fig. 6 (b), in the film 202 formed by drying the liquid film 201, a large convex part 202a is formed irregularly, for example, in a position different from that of the convex part 201a of the liquid film. When comparison is made between Fig. 6(a) and Fig. 6 (b), in the case of forming a film using a method for forming a coating film, not belonging to the present invention, it can be seen that during drying of the liquid film 201, the liquid migrates to cause a change in the shape of the surface between the liquid film 201 and the film 202. Further, this change occurs ununiformly, not uniformly, so that an uneven coating is recognized in the film 202.

Drying of the liquid film may be carried out naturally, or the drying may be facilitated with such method as heating, air stream, and evacuation. In the present invention, the drying period of the liquid film is preferably shorter. More preferable drying period is in the range of about 10 seconds or more to about 5 minutes or less. When the lower limit of the drying period is 10 seconds or more, namely, not too short, drying of the liquid film during the time when the aqueous coating composition is applied to a surface of the substrate can be prevented, and as a result, a uniform or a homogeneous film can be formed with conserving the fine concave-convex shape possessed by the liquid film. Still more preferable drying period is in the range of about 10 seconds or more to about 2 minutes or less.

Surface shape of dry film

According to a preferable embodiment of the present invention, the fine concave-convex shape possessed by the dry film which is obtained by the method according to the present invention has an isotropy. "Having an isotropy" means a state that the fine concave-convex shape is formed in arbitrary direction along surface of the coating film, namely, independent of an application direction (for example, a longitudinal direction and a lateral direction), so that line-shaped pattern and the like are not recognizable. The state like this can be confirmed, for example, by visual inspection of the film surface. Alternatively, this can also be confirmed by the fact that there is no meaningful difference in the measured values relating to the peaks obtained by a digital holographic microscopy analysis (this will be discussed later) in an arbitrary direction (for example, a longitudinal direction and a lateral direction) along the film surface.

In the embodiment described above, in addition to that the surface shape of the coating film has an isotropy, when the profile obtained by observing the surface shape of the film with a digital holographic microscope is processed and measured, the concave-convex shape of the surface of the film further has an average peak width of 300 $\mu$m or more to 500 $\mu$m or less, and an average peak number of 4 or more to 8 or less, per unit length of 2.5 mm. In the film having the surface shape like this, a plurality of convex parts and a plurality of concave parts are not only fine but also present uniformly or regularly over the entirety of the substrate surface.

The digital holographic microscope is an apparatus with which a surface shape of the coating film can be analyzed three-dimensionally in a very fine level. In the present invention, measured data obtained by using the digital holographic microscope are profiled to obtain 3 parameters, i.e., the width of the peak (convex part), the number of the peaks per unit length, and the ratio of the peak height relative to the film thickness; and these parameters are used as barometers of the surface shape of the coating film thereby realizing the quantification of the fine concave-convex shape. Among the three barometers, the width of the peak (convex part) and the number of the peaks per unit length can visualize two-dimensionally the uniformity or the regularity of the surface shape of the coating film. In addition to these two barometers, by taking the ratio of the peak height relative to the film thickness into account, the uniformity or the regularity of the surface shape of the coating film can be visualized three-dimensionally.

By using the digital holographic microscope, for example, by the method described as following, the width of the peak (convex part), the number of the peaks per unit length, and the ratio of the peak height relative to the film thickness in the surface shape of the coating film can be obtained.

The surface shape profile is measured in a prescribed direction and in a prescribed length, for example in a 10-mm length, in the coating film. Because the maximum visual field in one shot of the photograph is $1 \times 1$ mm, 13 shots of photographs are taken with moving the visual field by 0.8 mm in each shot. On the basis of 13 of the obtained two-dimensional surface shape profile (data of x, y, and the height), the one-dimensional profile (data of x and the height) is extracted. In order to integrate the 13 profiles, the baseline, drift, and position of each profile are corrected so as to integrate into one profile. At this time, with regard to the overlapped part, an average value of the two profile data is taken. In order to remove a noise of the obtained profile, the 100-points moving average is taken. The peak width, the number of the peaks per unit length, and the peak height are measured from the data of the position vs. the height thus obtained, in the ways as described below.

- Peak width: the distance between the two smallest parts (valley) in both sides of a peak is measured.
- Number of peaks: the profile is divided into, for example, 4 areas, i.e., into the areas of 0 to 2500 $\mu$m, 2500 to 5000 $\mu$m, 5000 to 7500 $\mu$m, and 7500 to 10000 $\mu$m, and the number of the peaks in each area is measured.
- Peak height: a straight line is drawn to connect the two smallest parts obtained in measurement of the peak width, and a perpendicular line is drawn from the summit of the peak to this straight line; and the distance from the peak to the straight line (peak height) is obtained. Then, the ratio of this distance relative to the film thickness is measured.

The film thickness can be obtained, for example, by the method described below. A scar to reach the substrate surface is made by cutting the sample film with a cutter knife. This scarred portion is measured with the digital holographic microscope; and from the difference in the heights between the film surface and the substrate surface, the film thickness is obtained.

According to a preferable embodiment of the present invention, the ratio of the peak height relative to the film thickness in the fine concave-convex shape of the coating film is 10% or less, wherein the ratio is measured after processing the profile obtained by observation of the surface shape of the coating film with the digital holographic microscope. The film having the surface shape as mentioned above can perform a sufficient photocatalytic effect if the film includes a photocatalyst. In addition, even if a thick convex part is uniformly formed in the film, a poor appearance such as an uneven coating is difficult to be recognized. In addition, the film has an excellent transparency.

Next, an aqueous coating composition to be used in the method for forming a coating film according to the present invention will be explained.

Aqueous coating composition

Viscosity

The viscosity of the aqueous coating composition may be properly determined, for example, in accordance with properties of a sponge roller to be used in combination with the composition. Details of the combination will be described later. According to a preferable embodiment of the present invention, the viscosity of the aqueous coating composition is 4.5 mPa·s or more. By controlling the lower limit of the viscosity of the aqueous coating composition at 4.5 mPa·s or more, namely by controlling the viscosity thereof so as not to be too low, spreading out of the convex part 101a formed of the aqueous coating composition to a surface of the substrate with wetting can be suppressed; and as a result, the liquid film 101 having the fine concave-convex shape can be formed. Also, in the step of forming the film (i.e., in the step of drying the liquid film), migration of the aqueous coating composition which forms the convex part 101a, namely, flow of the convex part 101a, can be suppressed, so that the liquid film 101 can be dried with conserving the fine concave-convex shape. As a result, recognition of a poor appearance such as an uneven coating in the film 102 can be suppressed.

According to a preferable embodiment of the present invention, the viscosity of the aqueous coating composition is less than 3000 mPa·s. By controlling the upper limit of the viscosity of the aqueous coating composition within this range, deterioration in the applicability of the aqueous coating composition can be suppressed. Also, as discussed later, for example, when a sponge roller having a small pore diameter is used, by controlling the viscosity of the aqueous coating composition preferably at 1000 mPa·s or less, while more preferably at 200 mPa·s or less, recognition of an uneven coating and so forth in the film can be suppressed more surely; and thus, this range is preferable. The viscosity of the aqueous coating composition may be controlled, for example, by using a thickener that will be discussed later.

The viscosity of the aqueous coating composition may be measured by using, for example, a B-type viscometer (for example, TV-10, manufactured by Toki Sangyo Co., Ltd.) or a rheometer (for example, HAAKE MARS II, manufactured by Thermo Scientific Inc.). Measurement conditions of the B-type viscometer are 6 rpm as the revolving speed of a rotor, and 25°C as the measurement temperature. With regard to the rotor, an L-adaptor is used when the viscosity of a sample is less than 100 mPa·s, an M1 rotor is used when the viscosity of a sample is in the range of 100 mPa·s or more to less than 1000 mPa·s, and an M2 rotor is used when the viscosity of a sample is in the range of 1000 mPa·s or more to less than 5000 mPa·s. The measurement condition of the rheometer is 25°C as the measurement temperature. A corn plate-type sensor (60 mm diameter with 1 degree) is used.

Surface tension

The surface tension of the aqueous coating composition may be properly determined for example, in accordance with properties of a sponge roller to be used in combination with the composition. Details of the combination will be described later. According to a preferable embodiment of the present invention, the surface tension of the aqueous coating composition is in the range of more than 25 mN/m to 72 mN/m or less. By controlling the lower limit of the surface tension of the aqueous coating composition at more than 25 mN/m, namely by controlling the surface tension so as not to be too low, spreading out of the convex part 101a formed of the aqueous coating composition to a surface of the substrate with wetting can be suppressed; and as a result, the liquid film 101 having the fine concave-convex shape can be formed. Also, in the step of forming the film (i.e., in the step of drying the liquid film), which will be discussed later, contact or adhesion of neighboring convex parts 101a with one another which are included in the fine concave-convex shape possessed by the liquid film 101 can be suppressed, so that the liquid film 101 can be dried with conserving the fine concave-convex shape. As a result, recognition of a poor appearance such as an uneven coating in the film 102 can be suppressed. By controlling the upper limit of the surface tension of the aqueous coating composition at 72 mN/m or less, deterioration of the wettability of the aqueous coating composition to the substrate, i.e., eventually, deterioration of the applicability of the composition can be suppressed. The surface tension of the aqueous coating composition may be controlled, for example, by using a surfactant, which will be discussed later.

The surface tension of the aqueous coating composition may be measured by heretofore publicly-known methods. Illustrative example of the measurement method includes a plate method (Wilhelmy method), a ring method (du Nouy method), a pendant drop method, and a maximum bubble pressure method. In the present invention, the surface tension of the aqueous coating composition is measured by using a maximum bubble pressure method. As one specific method, by using a surface tension measurement apparatus with a maximum bubble pressure method (SITA t60, manufactured by EKO Instruments, Co., Ltd.), a dynamic surface tension is measured with the bubble life of 30 to 20,000 ms; and then, the value at 20,000 ms is recorded as the surface tension (which is equivalent to a static surface tension).

Ingredients

The aqueous coating composition to be used in the present invention includes at least a functional particle and a dispersion medium which includes mainly water. With regard to the functional particle, preferably photocatalyst particle can be used.

Photocatalyst particle

The photocatalyst particle included in the aqueous coating composition is preferably at least one photocatalyst particle selected from the group consisting of an anatase-type titanium oxide, a rutile-type titanium oxide, a brookite-type titanium oxide, zinc oxide, tin oxide, niobium oxide, and strontium titanate. Among them, an anatase-type titanium oxide can be preferably used because it is excellent in photocatalytic activity and hydrophilization effect. As the photocatalyst particle, a photocatalyst particle whose responsiveness to visible-light is enhanced, for example, by doping an element such as nitrogen or by supporting a copper compound or an iron compound on a surface of the particle may be used.

The particle diameter of the photocatalyst particle is preferably in the range of 1 nm or more to 50 nm or less, while more preferably in the range of 5 nm or more to 20 nm or less. When the particle diameter is preferably 1 nm or more, more preferably 5 nm or more, the photocatalytic activity and the hydrophilization effect can be satisfactorily performed. When the particle diameter is preferably 50 nm or less, more preferably 20 nm or less, scattering of visible light is difficult to occur so that the film which has an excellent transparency can be obtained. Here, the particle diameter is calculated as a number-average value by measuring the lengths of 100 arbitrary particles when a cross section of the film is observed with a scanning electron microscope at the magnification of 200,000 times. If the shape of the particle to be observed is almost circle, the length of the particle means a diameter of the particle. If the shape of the particle to be observed is non-circular, the length of the particle is roughly calculated by the equation of (long diameter + short diameter) / 2.

The concentration of the photocatalyst particle is preferably in the range of 0.05 % by mass or more to 5% by mass or less, while more preferably in the range of 0.1 % by mass or more to 1% by mass or less. When the photocatalyst particle is included in the composition within this range, not only the photocatalytic activity and the hydrophilization effect thereof can be sufficiently performed, but also the coating film can be prevented from becoming too thick, so that an excellent transparency can be obtained.

Dispersion medium

The dispersion medium included in the aqueous coating composition mainly includes water. Here, "the dispersion medium mainly including water" is the one which includes water in the range of 60 % by mass or more to 100% by mass or less, while preferably in the range of 80 % by mass or more to 100% by mass or less. If a mixed solvent of water with an organic solvent other than water is used, the organic solvent is preferably the one which is soluble in water.

Illustrative example of the preferable water-soluble organic solvent includes methanol, ethanol, 1-propanol, 2-propanol, 1-butanol, 2-butanol, t-butanol, pentanol, hexanol, cyclobutanol, cyclopentanol, cyclohexanol, ethylene glycol, propylene glycol, glycerin, methyl cellosolve, and ethyl cellosolve. In the present invention, at least one organic solvent selected from this group may be used.

Preferably, the aqueous coating composition includes the dispersion medium such that the concentration of solid components in the composition may be in the range of 0.1 % by mass or more to 10 % by mass or less. When the dispersion medium is included in the composition within this range, the film that is transparent and has an excellent appearance can be obtained.

In the dispersion medium, pH is preferably 6 or less, or 8 or more. This pH range is sufficiently apart from the isoelectric point of the photocatalyst particle or of inorganic oxide particle that will be described later, so that the photocatalyst particle or the inorganic oxide particle can be stably dispersed. As a result, generation of agglomerated particles can be suppressed, so that the film that is transparent and has an excellent appearance can be obtained.

Thickener

In the present invention, the aqueous coating composition may include a thickener. By including a thickener, the viscosity of the aqueous coating composition can be controlled within a desired range. In the present invention, the viscosity of the aqueous coating composition is preferably more than 5 mPa·s.

In the present invention, the thickener included in the aqueous coating composition may be various substances usually used as a thickener, except for a substance extremely poor in solubility or dispersibility into water. A water-soluble thickener or a water-dispersible thickener may be exemplified as the thickener. By including the thickener like this, not only the viscosity of the aqueous coating composition can be controlled to a target viscosity, but also deterioration of the appearance of the coating film due to generation of agglomerate can be prevented. Illustrative example of the water-soluble thickener includes: polysaccharide thickeners such as xanthan gum, welan gum, Arabic gum, locust bean gum, diutan gum, and guar gum, while preferably polysaccharide thickeners including diutan gum and welan gum which include glucuronic acid and/or rhamnose in their main chains; synthetic water-soluble polymers such as polyacrylic acid, sodium polyacrylate, polyvinyl alcohol, and polyvinyl pyrrolidone; natural water-soluble polymers such as dextrin, pectin, and gelatin; alginic acid derivatives such as sodium alginate and ammonium alginate; and cellulose derivatives such as methyl cellulose, carboxymethyl cellulose, and hydroxyethyl cellulose. With regard to these water-soluble thickeners, commercially available thickeners may be used, which include with commercial names of: Satiaxane (xanthan gum, manufactured by Cargill Inc.), Welan Gum (welan gum, manufactured by Sansho Co., Ltd.), Arabic Kohl (arabic gum, manufactured by San-ei Yakuhin Co., Ltd.), Genu Gum (locust bean gum, manufactured by CP Kelco Inc.), Kelco Crete (diutan gum, manufactured by CP Kelco Inc.), Meyprodor (guar gum, manufactured by E.I. DuPont de Nemours and Company, Inc.), Aron (sodium polyacrylate, manufactured by Toagosei Co., Ltd.), and Polyvinyl Pyrrolidone (polyvinyl pyrrolidone, manufactured by Nippon Shokubai Co., Ltd.). Illustrative example of the water-dispersible thickener includes smectite-based clay minerals such as synthetic hectorite and synthetic saponite. With regard to these water-dispersible thickeners, commercially available thickeners may be used, which include with commercial names of: Laponite RD and Laponite B (both manufactured by Rockwood Ltd.), Lucentite (manufactured by Co-op Chemical Co., Ltd.), and Smectone SA (manufactured by Kunimine Industries Co., Ltd.). These thickeners may be used singly or as a mixture of two or more of them.

In the present invention, addition amount of the thickener suffices so far as the viscosity of the aqueous coating composition can be controlled preferably at the value of 4.5 mPa·s or more, so that the amount thereof is properly determined with considering the kind and the like of the thickener. In the case of using, for example, diutan gum (Kelco-Crete DG, manufactured by CP Kelco Inc.) as the thickener, in order to control the viscosity of the aqueous coating composition within a desired range, the addition amount of the thickener is preferably in the range of 0.01 % by mass or more to 0.25% by mass or less.

Surfactant

In the present invention, the aqueous coating composition may include a surfactant. By including a surfactant, the surface tension of the aqueous coating composition can be controlled within a desired range. According to a preferable embodiment of the present invention, the surface tension of the aqueous coating composition is in the range of more than 25 mN/m to 72 mN/m or less.

By controlling the surface tension within a desired range, the wettability of the aqueous coating composition to a surface of the substrate can be enhanced so that the liquid film 101 can be uniformly formed on the surface of the substrate. In addition, evaporation of the dispersion medium from the liquid film 101 becomes even, so that the film 102 can be formed with conserving the fine concave-convex shape possessed by the liquid film 101. Preferably, the surfactant usable in the present invention is a substance that is high in solubility into water, which is a main component of the dispersion medium, and has a high effect to lower the surface tension. By using the surfactant having a high effect to lower the surface tension, the surface tension of the aqueous coating composition can be controlled within a desired range by adding a very small amount of the surfactant; and as a result, durability of the film 102 can be enhanced. Also, the surfactant is preferably a substance which has a poor foaming property. When the aqueous coating composition including bubbles is used, bubbles are formed in the liquid film 101 thereby leaving the trace thereof in the film 102; however, when a poor-foaming or -bubbling surfactant is used, deterioration of the appearance of the coating film due to the residual bubbles can be prevented. Illustrative example of the preferable surfactant like this includes an acetylenediol-based surfactant and a polyether-modified silicone-based surfactant.

In the present invention, addition amount of the surfactant suffices so far as the surface tension of the aqueous coating composition can be controlled in the range of more than 25 mN/m to 72 mN/m or less; and therefore, the addition amount is properly determined with considering the kind and the like of the surfactant. For example, when an acetylenediol-based surfactant or a polyether-modified silicone-based surfactant is used as the surfactant, in order to control the surface tension of the aqueous coating composition within a desired range, the addition amount of the surfactant is preferably in the range of 0.01 % by mass or more to 0.5% by mass or less. Due to this, excessive lowering of the surface tension of the aqueous coating composition can be prevented; and as a result, the liquid film 101 and the coating film 102 that have the fine concave-convex shape can be formed.

Inorganic oxide particle

In the present invention, the aqueous coating composition may include an inorganic oxide fine particle. The inorganic oxide fine particle which can not only function as a binder but also form a transparent film can be preferably used. Illustrative example of the preferable material thereof includes at least one selected from silicon oxide, aluminum oxide, zirconium oxide, hafnium oxide, cerium oxide, and the like, which are oxide fine particles different from the photocatalyst particle. Among them, silicon oxide fine particle is especially preferable because it is excellent as a binder thereby having a high adhesiveness to the substrate of the film.
The particle diameter of the inorganic oxide fine particle is preferably 50 nm or less. When the particle diameter thereof is within this range, scattering of visible light is difficult to occur, so that the film that has an excellent transparency can be obtained. Further, when the particle diameter thereof is 20 nm or less, an effect as a binder becomes higher, so that the film is excellent in adhesiveness. Here, the particle diameter is calculated as a number-average value by measuring the lengths of 100 arbitrary particles when a cross section of the film is observed with a scanning electron microscope at the magnification of 200,000 times. If the shape of the particle to be observed is almost circle, the length of the particle means a diameter of the particle. If the shape of the particle to be observed is non-circular, the length of the particle is roughly calculated by the equation of (long diameter + short diameter) / 2.
The concentration of the inorganic oxide fine particle is preferably in the range of 0.05 % by mass or more to 5% by mass or less, while more preferably in the range of 0.1 % by mass or more to 1% by mass or less. When the inorganic oxide fine particle is included within this range, not only an effect as a binder can be performed sufficiently well, but also the coating film can be prevented from becoming too thick, so that an excellent transparency can be obtained.

Application of aqueous coating composition to substrate

<Application method>

According to a preferable embodiment of the present invention, the aqueous coating composition is applied to the substrate by using, for example, a roller. The material of the roller is preferably a sponge.

Sponge roller

In the present invention, the sponge of the sponge roller is preferably a wet-type sponge. In the wet-type sponge, a porous structure is formed, for example, by curing a raw material resin into which fine particles of a water-soluble salt (pore-generating agent) is kneaded, and then, by washing out the salt. Accordingly, in a wet bubbling method, by using small fine particles, a sponge having a small pore diameter can be readily formed. On the other hand, in a dry-type sponge, a porous structure is formed by foaming a raw material resin (for example, urethane) by utilizing a foaming agent or a gas generated in a polymerizing step. Accordingly, in a dry bubbling method, a sponge having a small pore diameter is difficult to be formed.

Continuous pore

According to a preferable embodiment of the present invention, the sponge roller has a continuous pore. "Continuous pore" means a state in which at least a part of neighboring pores are connected with one another. Here, the term "neighboring" means the embodiment in which the pores are disposed in a neighborhood with one another and are in contact with one another not only in a two-dimensional manner but also in a three-dimensional manner.

Average pore diameter

According to a preferable embodiment of the present invention, the average pore diameter of the continuous pores that are possessed by the sponge roller is, for example, in the range of 30 $\mu$m or more to 150 $\mu$m or less, though depending on the liquid properties such as viscosity and/or surface tension of the aqueous coating composition to be applied. The average pore diameter thereof is more preferably less than 100 $\mu$m, while still more preferably 50 $\mu$m or less. When the average pore diameter of the sponge roller is small and within this range, the liquid film 101 having the fine concave-convex shape can be formed. Here, the average pore diameter means an average diameter of the diameters of individual pores constituting the continuous pores. The average pore diameter can be measured, for example, by the following way. Namely, the photograph of the sponge roller is taken with a scanning electron microscope at the magnification of 100 times, and two lines with length (l) are drawn diagonally in the scanning electron microscopic image; and the number of the pores (n) which traverses these lines is counted. The average pore diameter ($\mu$m) is calculated by the equation of 2l/n.

In the present invention, in the case that the viscosity of the aqueous coating composition is low, it is preferable to use the sponge roller having a small pore diameter. By properly contriving a combination of the composition with the sponge roller in the way as mentioned above, the liquid film and the film which are uniform or homogeneous and have the fine concave-convex shape can be formed.

In the present invention, in the case that the sponge roller having a small pore diameter is used, it is preferable to use the aqueous coating composition having a low surface tension.

Meanwhile, it is preferable to consider not only the pore diameter of the sponge roller and the properties (such as viscosity and surface tension) of the aqueous coating composition to be combined with the sponge roller, but also a bubble point diameter and an ethanol permeation time, that will be discussed below, as a whole.

Ethanol permeation time

According to a preferable embodiment of the present invention, the ethanol permeation time of the sponge roller is in the range of 20 seconds or more to 270 seconds or less. The ethanol permeation time is one barometer of a performance of the sponge roller, indicating, for example, a water absorption performance of the sponge roller. The ethanol permeation time may be measured, for example, by the following way. Namely, a glass tube having an inner diameter of 17.4 mm is arranged vertically, and a plate having a hole with a diameter of 6.8 mm is attached to the lower end portion of the glass tube such that the cross section of the glass tube and the hole can be placed concentrically. Further, a sponge that is cut to the thickness of 2 mm is attached so as to cover the hole of the plate. Into the glass tube, ethanol is poured to the height of 100 mm (23.7 mL); and then, the time until complete discharge of ethanol through the sponge is measured. In the present invention, the ethanol permeation time of the sponge roller is more preferably in the range of 27 seconds or more to 261 seconds or less, still more preferably in the range of 70 seconds or more to 261 seconds or less, while especially preferably in the range of 150 seconds or more to 261 seconds or less.

Bubble point diameter

According to a preferable embodiment of the present invention, the bubble point diameter of the sponge roller is, for example, 42 $\mu$m or less. The bubble point diameter is one barometer of a performance of the sponge roller, indicating, for example, a water absorption performance of the sponge roller. The bubble point diameter is the maximum pore diameter measured by a method stipulated in ASTM F316-03 and JIS K 3832 (bubble point method). Namely, the sponge is soaked in a test solution with increasing an air pressure from a lower side, and an air bubble is generated for the first time from a pore of a maximum pore diameter when the pressure reaches a certain value. By using the pressure (P: bubble point pressure) at the time when the air bubble was generated, the maximum pore diameter (D) is obtained from the following equation. With regard to the test solution, for example, ethanol may be used. In the present invention, the bubble point diameter of the sponge roller is more preferably 26 $\mu$m or less, while still more preferably 16.5 $\mu$m or less.

$$D = 4\gamma\cos\theta/P$$

(In the equation, D represents the maximum pore diameter (m); $\gamma$ represents the surface tension of the test solution (N/m); $\theta$ represents the contact angle of the sponge with the test solution (rad); and P represents the bubble point pressure (Pa)).

Water absorbing rate

According to a preferable embodiment of the present invention, the water absorbing rate of the sponge roller is 1 minute or less. The water absorbing rate is one barometer of a performance of the sponge roller. The water absorbing rate is measured, for example, by referring to 7.1.1 Dropping Method in JIS L1907 "Water Absorption Test Method of Fiber Product". Namely, a drop of water (0.04 mL) is dropped from the height of 10 mm onto a surface of a test piece;

and the time is measured from when the water drop reaches the surface of the test piece to when a specular reflection disappears as the test piece absorbs the water drop thereby resulting in the state that only a moist is left. Meanwhile, JIS L1907 stipulates the measurement using a test piece having a size of 200 mm × 200 mm; however, in this specification, a cylindrical-shaped circumference surface of the roller is used as the test piece. In the present invention, the water absorbing rate of the roller is preferably 30 seconds or less, more preferably 5 seconds or less, while still more preferably 1 second or less.

According to a preferable embodiment of the present invention, the sponge roller has at least one or more performances selected from the group consisting of the continuous pore, the average pore diameter, the bubble point diameter, the ethanol permeation time, and the water absorbing rate. According to a more preferable embodiment of the present invention, the sponge roller is the one which is excellent in liquid absorbing property, having the continuous pore as well as at least one or more performances selected from the group consisting of the average pore diameter, the bubble point diameter, the ethanol permeation time, and the water absorbing rate. By using the sponge roller having the performances as mentioned above, the liquid film 101 having the fine concave-convex shape can be formed more surely. For example, the sponge roller is preferably the one which has the continuous pore, the average pore diameter of 30 μm or more to 150 μm or less, and the ethanol permeation time of 20 seconds or more to 270 seconds or less.

Also, the sponge roller is preferably the one which has the continuous pore, and the average pore diameter of 30 μm or more to 100 μm or less. Also, the sponge roller is preferably the one which has the continuous pore, the pore diameter of 30 μm or more to 50 μm or less, and the bubble point diameter of 16.5 μm or less.

A preferable combination of the aqueous coating composition with the sponge roller usable in the present invention is, for example, the combination of the aqueous coating composition having the viscosity of 4.5 mPa·s or more to less than 3000 mPa·s and the sponge roller having the continuous pore, the average pore diameter of 30 μm or more to 150 μm or less, and the ethanol permeation time of 20 seconds or more to 270 seconds or less.

A preferable combination of the aqueous coating composition with the sponge roller usable in the present invention is, for example, the combination of the aqueous coating composition having the surface tension of more than 25 mN/m to 72 mN/m or less and the sponge roller having the continuous pore, the average pore diameter of 30 μm or more to 150 μm or less, and the ethanol permeation time of 20 seconds or more to 270 seconds or less.

Application amount

According to a preferable embodiment of the present invention, the application amount of the aqueous coating composition per one application to the surface of the substrate in the step of forming the liquid film is in the range of 2 $g/m^2$ or more to 15 $g/m^2$ or less, though the amount is dependent on the sponge roller and the surface tension, viscosity, and the like of the aqueous coating composition to be used. When the application amount per one application is within this range, the liquid film 101 having the fine concave-convex shape can be formed. When the lower limit of the application amount per one application is 2 $g/m^2$ or more, the aqueous coating composition can be spread to the entirety of the surface of the substrate, and therefore can be applied uniformly without blurring. When the upper limit of the application amount per one application is 15 $g/m^2$ or less, a formation of the liquid film 201 having a pool, i.e., a large convex part 201a, can be suppressed. Namely, migration of the liquid from the convex part to the concave part during the time of forming the liquid film can be suppressed; and as a result, contact or adhesion of the neighboring convex parts with one another can be suppressed. Consequently, a large convex part 202a which is recognizable as an uneven coating in the film is not formed; and thus, the film 102 that is excellent without recognizable poor appearance can be formed. The application amount per one application is more preferably in the range of 3 $g/m^2$ or more to 10 $g/m^2$ or less, while still more preferably in the range of 5 $g/m^2$ or more to 7 $g/m^2$ or less. For example, when the sponge roller having a large pore diameter is used and the aqueous coating composition having a large viscosity is applied, it is preferable that the application amount of the composition to be practically coated on the surface of the substrate is adjusted to less than 10 $g/m^2$.

Application method

According to a preferable embodiment of the present invention, as illustrated in Fig. 3, the aqueous coating composition is applied to a surface of the substrate with rolling the sponge roller 10 to form the liquid film 101. Due to this, the aqueous coating composition can be applied in such a way that the roller surface does not slide on the surface of the substrate. The fine concave and convex (101a and 101b) are formed owing to the pore of the sponge; however, in such a case as using a stop roller, if the aqueous coating composition is applied without rolling the roller, the concave and convex formed on the surface of the substrate are drawn with movement of the roller, thereby resulting in recognition of the drawn concave and convex as an uneven coating having a coating line. By rolling the roller, owing to the afore-mentioned various performances of the sponge roller, a seepage (the arrow $A_{out}$ in Fig. 3) of the aqueous coating composition and an absorption (the arrow $A_{in}$ in Fig. 3) of the excessive aqueous coating composition already applied to the surface of the substrate can be executed in a proper balance, so that the liquid film 101 having the fine concave-convex shape can be formed.

Substrate

In the present invention, illustrative example of the preferable substrate to which the aqueous coating composition can be applied includes ceramic inorganic materials such as glass and tile; resin materials such as PMMA and polycarbonate; a metal material; and an organic painted surface formed on surfaces of these substrates.

Pretreatment of substrate

In the present invention, in order to prevent a poor film-forming performance due to that the aqueous coating composition is shed by a substrate, the substrate may be washed previously, for example, with cerium oxide powder. Meanwhile, sufficient washing to secure a wettability of the surface of the substrate is not always necessary.

Functional member

The functional member according to the present invention includes a substrate and a coating film formed on a surface of the substrate, wherein the coating film has the fine concave-convex shape including a plurality of the convex parts and a plurality of the concave parts. The fine concave-convex shape of the film is, when the surface (X-Y plane) of the film is observed two-dimensionally, preferably a fine net-like shape or a scale-like shape, while the scale-like shape is more preferable. The terms "fine concave-convex shape", "net-like fine concave-convex shape", and "scale-like fine concave-convex shape" have been already explained previously.
According to a preferable embodiment of the present invention, the fine concave-convex shape possessed by the coating film has an isotropy. The term "isotropy" has been explained previously.
In the embodiment described above, in addition to that the surface shape of the coating film has an isotropy, when the profile obtained by observing the surface shape of the film with a digital holographic microscope is processed and measured, the fine concave-convex shape of the surface of the film further has an average peak width of 300 μm or more to 500 μm or less, and an average peak number of 4 or more to 8 or less, per unit length of 2.5 mm. In the film having the surface shape like this, a plurality of the convex parts and a plurality of the concave parts are not only fine but also present uniformly or regularly over the entirety of surface of the substrate.
The digital holographic microscope, as well as the peak width, the peak number per unit length, and the ratio of the peak height relative to the film thickness in the surface shape profile obtained by using the microscope has already been explained previously.
According to a preferable embodiment of the present invention, the ratio of the peak height relative to the film thickness in the fine concave-convex shape of the coating film is 10% or less, wherein the ratio is measured after processing the profile obtained by observation of the surface shape of the coating film with the digital holographic microscope. The film having the surface shape as mentioned above is a uniform film in which a poor appearance such as an uneven coating or a coating line is not recognizable.

EXAMPLES

Preparation of aqueous coating composition

<Raw materials>

- Photocatalyst particle 1: a mildly basic aqueous dispersion including anatase-type titanium oxide fine particle having a particle diameter of 20 nm.
- Photocatalyst particle 2: a mildly basic aqueous dispersion including anatase-type titanium oxide fine particle having a particle diameter of 30 to 60 nm.
- Inorganic oxide particle 1: a basic aqueous dispersion including silica fine particle having a particle diameter of 8 to 11 nm.
- Inorganic oxide particle 2: a basic aqueous dispersion including silica fine particle having a particle diameter of 4 to 6 nm.
- Surfactant 1
- Surfactant 2

- Surfactant 3
- Thickener 1: diutan gum

The aqueous coating compositions 1 to 11 were prepared which respectively include, as described in Table 1, the photocatalyst particle, the inorganic oxide particle, the surfactant, the thickener, and water, with the respective concentrations (% by mass) as described in Table 1.

[Table 1]

| Kind | Photocatalyst particle | | Inorganic oxide particle | | Surfactant | | Thickener | | Dispersion medium | |
|---|---|---|---|---|---|---|---|---|---|---|
| | Kind | Amount (mass %) | Kind | Amount (mass %) | Kind | Amount (mass %) | Kind | Amount (mass %) | Kind | Amount (mass %) |
| 1 | 1 | 1 | 1 | 1 | 1 | 0.01 | - | 0 | Water | 97.99 |
| 2 | | 1 | | 1 | 1 | 0.02 | - | 0 | | 97.98 |
| 3 | | 1 | | 1 | 1 | 0.02 | 1 | 0.05 | | 97.93 |
| 4 | | 1 | | 1 | 2 | 0.06 | - | 0 | | 97.94 |
| 5 | 2 | 0.5 | 2 | 0.5 | - | 0 | - | 0 | | 99.00 |
| 6 | | 0.5 | | 0.5 | 1 | 0.02 | - | 0 | | 98.98 |
| 7 | | 0.5 | | 0.5 | 3 | 0.02 | - | 0 | | 98.98 |
| 8 | | 0.5 | | 0.5 | 2 | 0.06 | - | 0 | | 98.94 |
| 9 | 2 | 0.5 | 2 | 0.5 | 1 | 0.02 | 1 | 0.05 | | 98.93 |
| 10 | | 0.5 | | 0.5 | 1 | 0.02 | | 0.1 | | 98.88 |
| 11 | | 0.5 | | 0.5 | 1 | 0.02 | | 0.2 | | 98.78 |

The surface tension and the viscosity of each of the aqueous coating compositions 1 to 11 were as described in Table 2. The surface tension was measured as follows. By using the surface tension measurement apparatus with a maximum bubble pressure method (SITA t60, manufactured by EKO Instruments, Co., Ltd.), a dynamic surface tension was measured at the bubble life of 30 to 20,000 ms; and then, the value at 20,000 ms was taken as the surface tension (equivalent to a static surface tension). The viscosity was measured by using a B-type viscometer (TV-10, manufactured by Toki Sangyo Co., Ltd.) or a rheometer (HAAKE MARS II, manufactured by Thermo Scientific Inc.). Measurement conditions of the B-type viscometer were 6 rpm as the revolving speed and 25°C as the measurement temperature. The rotors used for the measurement were: an L-adaptor when the viscosity of the sample was less than 100 mPa·s, an M 1 rotor when the viscosity of the sample was in the range of 100 mPa·s or more to less than 1000 mPa·s, and an M2 rotor when the viscosity of the sample was in the range of 1000 mPa·s or more to less than 5000 mPa·s. In the rheometer, the measurement condition was 25°C as the measurement temperature, and a corn plate-type sensor (60 mm diameter with 1 degree) was used.

[Table 2]

| Aqueous coating composition | | |
|---|---|---|
| Kind | Surface tension (mN/m) | Viscosity (mPa·S) |
| 1 | 58 | 7.4 |
| 2 | 56 | 6.9 |
| 3 | 56 | 45 |
| 4 | 30 | 7.9 |
| 5 | 72 | 7.2 |
| 6 | 54 | 5.4 |

(continued)

| Aqueous coating composition | | |
|---|---|---|
| Kind | Surface tension (mN/m) | Viscosity (mPa·S) |
| 7 | 48 | 8.6 |
| 8 | 29 | 4.5 |
| 9 | 54 | 185 |
| 10 | 53 | 684 |
| 11 | 56 | 2079 |
| 12 | 25 | 11 |
| 13 | 25 | 15 |

Formation of coating film

Preparation of substrates

In the following Test 1 to Test 7, a soda lime glass (200 × 200 × 2t (mm)) was prepared as a substrate. Then, a surface of the glass was washed with an abrasive which contained cerium oxide powder so as to make the surface of the glass hydrophilic. Thereafter, the surface of the glass was rinsed well with ion-exchanged water, and then dried naturally. In Test 8, an organic painted body of an exterior material was used as a substrate. In Test 9, a float glass plate (ordinary glass with the size of 100 × 200 × 2t (mm)) was prepared as a substrate, which was then subjected to the same treatment as the treatment applied to the substrates of Tests 1 to 7.

Test 1: Test using various sponge rollers

Various rollers

Materials, production method, and physical properties (average pore diameter, bubble point diameter, ethanol permeation time, and water absorbing rate) of the rollers 1 to 9 used are shown in Table 3.
The average pore diameter was obtained as follows. The photograph of the sponge roller was taken with a scanning electron microscope at the magnification of 100 times, and two lines with length (l) were drawn diagonally in the scanning electron microscopic image; and the number of the pores (n) which traversed these lines was counted. The average pore diameter ($\mu$m) was calculated by the equation of 2l/n.
The bubble point diameter was measured by the bubble point method stipulated in ASTM F316-03 and JIS K 3832 in the way as described below. The sponge was soaked in a test solution with increasing an air pressure from a lower side, and the diameter of a pore from which an air bubble was generated for the first time was taken as the maximum pore diameter. By using the pressure (P: bubble point pressure) at the time when the air bubble was generated, the maximum pore diameter (D) was obtained from the following equation. With regard to the test solution, ethanol was used.

$$D = 4\gamma\cos\theta/P$$

(In the equation, D represents the maximum pore diameter (m); $\gamma$ represents the surface tension of the test solution (N/m); $\theta$ represents the contact angle of the sponge with the test solution (rad); and P represents the bubble point pressure (Pa)).
The ethanol permeation time was obtained in the way as described below. A glass tube having an inner diameter of 17.4 mm was arranged vertically, and a plate having a hole with a diameter of 6.8 mm was attached to the lower end portion of the glass tube such that the cross section of the glass tube and the hole could be placed concentrically. Further, a sponge that was cut to the thickness of 2 mm was attached so as to cover the hole of the plate; and then, into the glass tube, ethanol was poured to the height of 100 mm (23.7 mL); and then, the time until complete discharge of ethanol through the sponge was measured.
The water absorbing rate was measured in the way as described below by referring to 7.1.1 Dropping Method in JIS L1907 "Water Absorption Test Method of Fiber Product". A drop of water (0.04 mL) was dropped from the height of 10 mm onto a surface of a test piece; and the time was measured from when the water drop reached the surface of the test piece to when a specular reflection disappeared as the test piece was absorbing the water drop thereby resulting in the state that only a moist was left. A cylindrical-shaped circumference surface of the roller was used as the test piece. With regard to the roller in which water absorption was recognized instantaneously, the water absorbing rate thereof was measured by taking a slow motion video film of this test.

[Table 3]

| Kind | Material | | Production method | Average pore diameter | Bubble point diameter (mm) | Ethanol permeation time | Water absorption | |
|---|---|---|---|---|---|---|---|---|
| | | | | | | | Result | Rate |
| Roller 1 | Sponge | Urethane | Wet method | 30μm | - | 261 seconds | Instant | 0.67 seconds |
| Roller 2 | Sponge | Urethane | Wet method | 50μm | 15.9 | 184 seconds | Instant | 0.33 seconds |
| Roller 3 | Sponge | Urethane | Wet method | 80μm | 25.1 | 77 seconds | Instant | 0.28 seconds |
| Roller 4 | Sponge | Urethane | Wet method | 150μm | 41.8 | 32 seconds | Instant | 0.24 seconds |
| Roller 5 | Sponge | Urethane | Wet method | 200μm | 35.8 | 63 seconds | Instant | 0.20 seconds |
| Roller 6 | Sponge | Low-density olefin type | Wet method | 50μm | 16.5 | 27 seconds | | 20.50 seconds |
| Roller 7 | Sponge | Low-density olefin type | Wet method | 200μm | 28.4 | 379 seconds | | 7.79 seconds |
| Roller 8 | Wool | - | - | - | - | - | Instant | 0.30 seconds |
| Roller 9 | Sponge | Urethane | Dry method | 500μm | - | - | >60 seconds | Not absorbed within 10 minutes |

<Formation of liquid film>

By using various sponge rollers having different average pore diameters and so forth as described in Table 3, the same aqueous coating composition 1 was applied to the surface of the substrate with the application amount of the composition to be practically coated on the surface of the substrate (g/m$^2$) per one application as described in Table 4 to form the liquid films (liquid films 1 to 10) of the samples 1 to 10. Only the liquid film 9 was formed without rolling the roller.

<Formation of film>

The substrates on which the liquid films 1 to 10 were formed were allowed to stand horizontally, and they were dried naturally until a sufficiently dry state to form the films (films 1 to 10) of the samples 1 to 10.

Evaluation

Evaluation of appearance

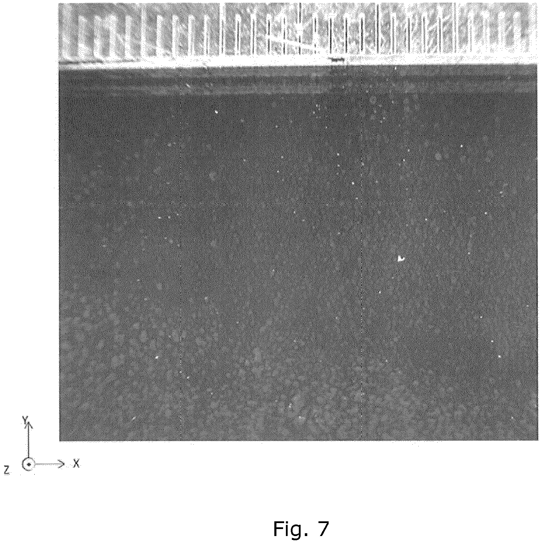

Appearance of the film which was formed by using each of various rollers was observed by taking the photograph thereof. When the appearance was very good, this was judged as A; when the appearance was good, this was judged as B, when the appearance was rather poor but practically acceptable, this was judged as C; and when the appearance was not good, this was judged as D.
The liquid film 1 of the sample 1 formed by using the roller 1 having the average pore diameter of 30 μm had

the fine concave-convex shape (scale-like shape). When the shape of the film 1 was observed by taking the photograph thereof, the film 1 had the fine concave-convex shape (scale-like shape) with conserving the fine concave-convex shape possessed by the liquid film 1; and the appearance of the film 1 was very good and thus was judged as A. The image of the film 1 is shown in Fig. 7. Meanwhile, Fig. 4 (a) mentioned before corresponds to the liquid film 1 of the sample 1, and Fig. 4 (b) mentioned before corresponds to the film 1 of the sample 1, respectively. In the sample 1, the liquid film was dried quickly in about 10 seconds.

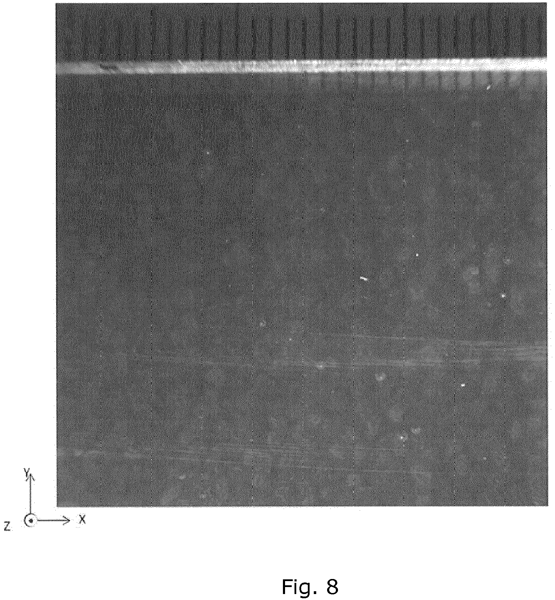

The liquid film 2 of the sample 2 formed by using the roller 2 having the average pore diameter of 50 $\mu$m had the fine concave-convex shape (scale-like shape). When the shape of the film 2 was observed by taking the photograph thereof, the film 2 had the fine concave-convex shape (scale-like shape) with conserving the fine concave-convex shape possessed by the liquid film 2; and the appearance of the film 2 was very good and thus was judged as A. The image of the film 2 is shown in Fig. 8. In the sample 2, too, the liquid film was dried quickly in about 10 seconds.

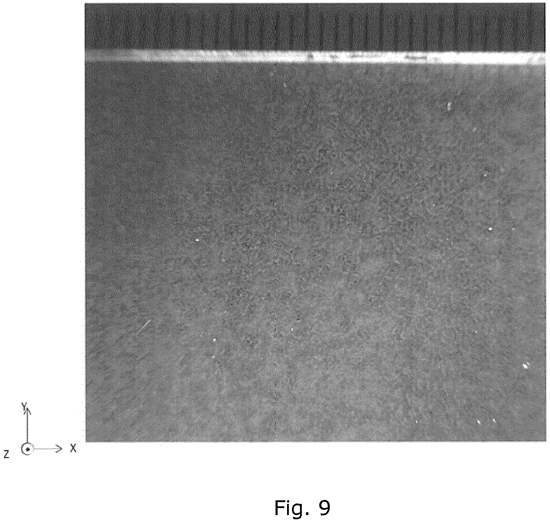

The liquid film 3 of the sample 3 formed by using the roller 3 having the average pore diameter of 80 $\mu$m had the fine concave-convex shape (fine net-like shape). When the shape of the film 3 was observed by taking the photograph thereof, the film 3 had the fine concave-convex shape (fine net-like shape) with conserving the fine concave-convex shape possessed by the liquid film 3; and the appearance of the film 3 was good and thus was judged as B. The image of the film 3 is shown in Fig. 9. In the sample 3, the liquid film was dried quickly.

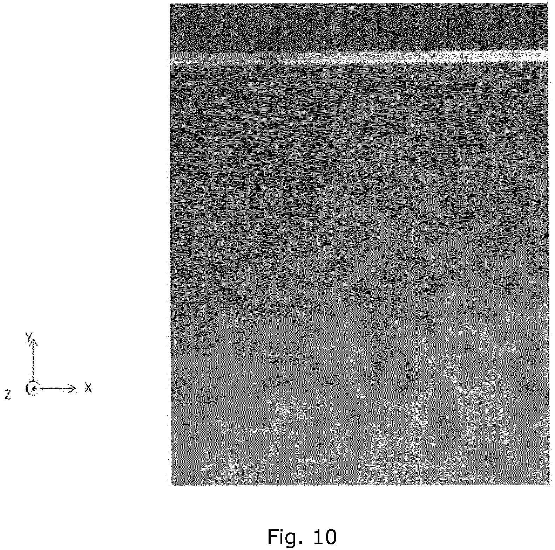

The liquid film 4 of the sample 4 formed by using the roller 4 having the average pore diameter of 150 $\mu$m had the fine concave-convex shape (fine net-like shape). When the shape of the film 4 was observed by taking the photograph thereof, in the film 4, a part of the convex parts constituting the fine concave-convex shape (fine net-like shape) that was possessed by the liquid film 4 was flowed; and as a result, a part of the fine concave-convex shape (fine net-like shape) of the liquid film 4 was not conserved, but the convex parts were uniformly disposed over the entirety of the film 4. In the film 4, an uneven coating was difficult to be recognized, so that the appearance thereof was practically acceptable and thus was judged as C. The image of the film 4 is shown in Fig. 10. In the sample 4, drying of the flowed part of the liquid film took somewhat a longer time. The drying time thereof was about 1 to 2 minutes.

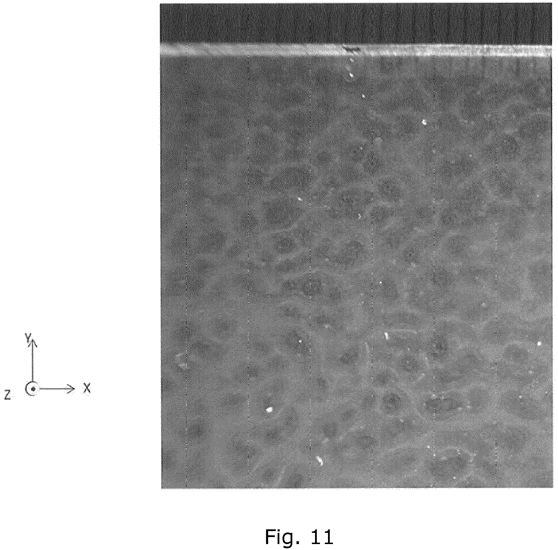

The liquid film 5 of the sample 5 formed by using the roller 5 having the average pore diameter of 200 $\mu$m had a net-like shape including a large convex part. When the shape of the film 5 was observed by taking the photograph thereof, the film 5 did not conserve the net-like shape including the large convex part possessed by the liquid film 5. In the film 5, an uneven coating was recognized, and the appearance thereof was not good and thus was judged as D. The image of the film 5 is shown in Fig. 11. Meanwhile, Fig. 6 (a) mentioned before corresponds to the liquid film 5 of the sample 5, and Fig. 6 (b) mentioned before corresponds to the film 5 of the sample 5, respectively. In the sample 5, drying of the large convex part of the liquid film 5 was difficult. Drying of the liquid film 5 took about 5 minutes.

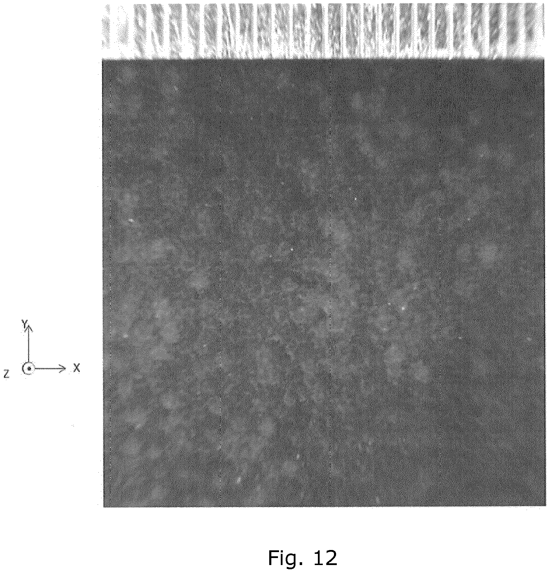

The liquid film 6 of the sample 6 formed by using the roller 6 which was of a low-density olefin type and had the average pore diameter of 50 $\mu$m had a scale-like shape and a net-like shape. When the shape of the film 6 was observed by taking the photograph thereof, the film 6 conserved the scale-like shape and the net-like shape possessed by the liquid film 6; and the appearance of the film 6 was good and thus was judged as B. The image of the film 6 is shown in Fig. 12. In the sample 6, the liquid film was dried quickly.

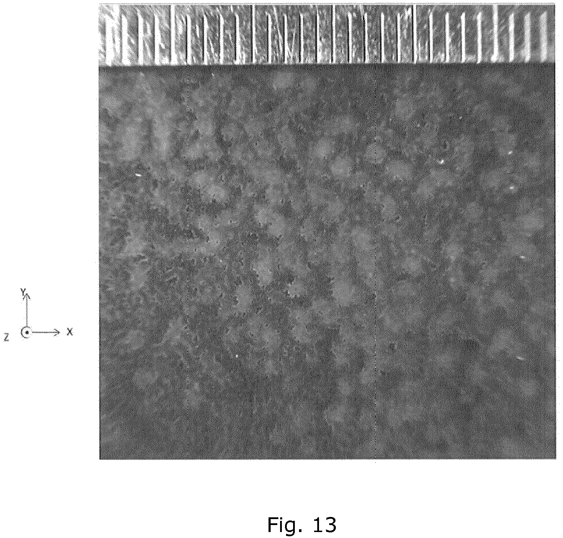

The liquid film 7 of the sample 7 formed by using the roller 7 which was of a low-density olefin type and had the average pore diameter of 200 $\mu$m had a net-like shape including a large convex part. When the shape of the film 7 was observed by taking the photograph thereof, the film 7 did not conserve the net-like shape including the large convex part possessed by the liquid film 7. In the film 7, an uneven coating was recognized, and the appearance thereof was not good and thus was judged as D. The image of the film 7 is shown in Fig. 13. In the sample 7, drying of the liquid film took about 5 minutes.

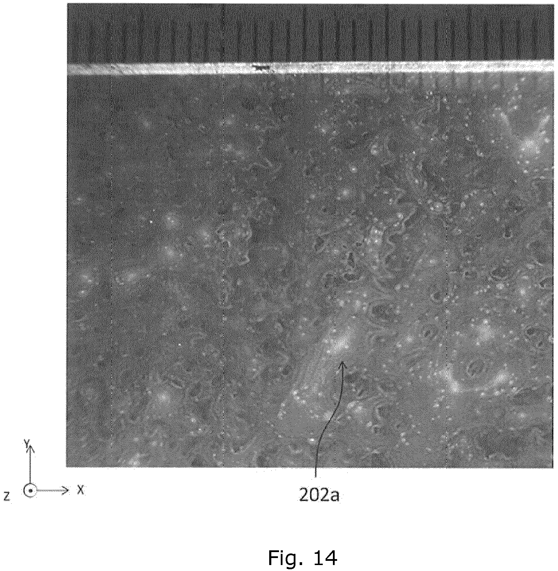

The liquid film 8 of the sample 8 formed by using the roller 8 which was made of a wool material included a large convex part (for example, 201a in Fig. 2 (b)). When the shape of the film 8 was observed by taking the photograph thereof, the film 8 included a large convex part (for example, 202a in Fig. 2 (b)) which reflected the large convex part included in the liquid film 8, or a large convex part newly formed by adhering the large convex parts, which were included in the liquid film 8, with one another during drying. Moreover, not only the thicknesses and the diameters of the large convex parts of the film 8 varied but also the disposition thereof in the film was not even. In the film 8, an uneven coating was clearly recognized, and the appearance thereof was not good and thus was judged as D. The image of the film 8 is shown in Fig. 14. In the sample 8, drying of the liquid film took about 5 minutes.

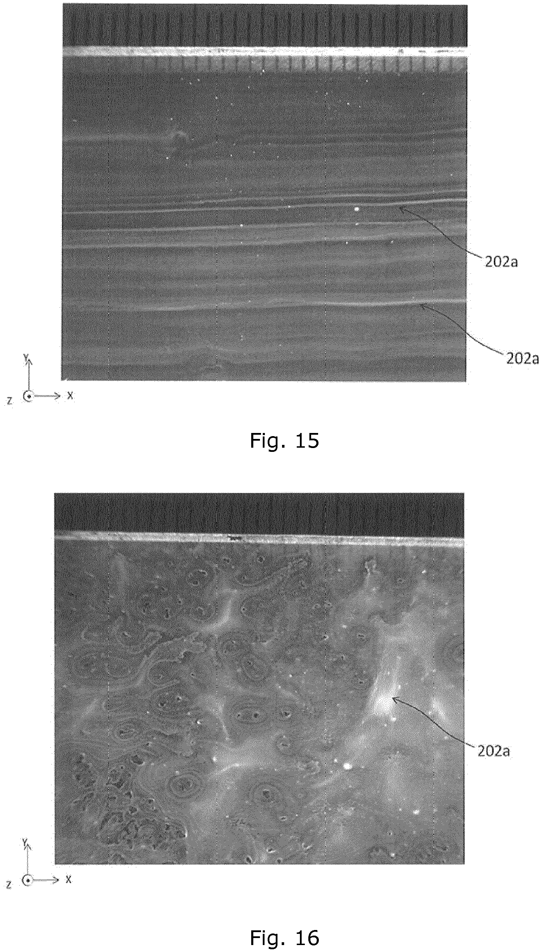

The liquid film 9 of the sample 9 by using the roller 8, which was made of a wool material, without rolling the roller included a large convex part (for example, 201a in Fig. 2 (b)), which was formed in a line shape. When the shape of the film 9 was observed by taking the photograph thereof, the film 9 included a large convex part (for example, 202a in Fig. 2 (b)) formed in a line shape which reflected the large convex part formed in the line shape that was included in the liquid film 9. In the film 9, this line was clearly recognized, and the appearance thereof was not good and thus was judged as D. The image of the film 9 is shown in Fig. 15. In the sample 9, drying of the liquid film took about 5 minutes.

The liquid film 10 of the sample 10 formed by using the roller 9, which was made of a dry sponge material and had the average pore diameter of 500 $\mu$m, included a large convex part (for example, 201a in Fig. 2 (b)). When the shape of the film 10 was observed by taking the photograph thereof, the film 10 included a large convex part (for example, 202a in Fig. 2 (b)), or a large convex part newly formed by adhering the large convex parts, which were included in the liquid film 10, with one another during drying. In the film 10, the large convex parts of the film 10 were clearly recognized as an uneven coating, and the appearance thereof was not good and thus was judged as D. The image of the film 10 is shown in Fig. 16. In the sample 10, drying of the liquid film took about 5 minutes.

Test 2: Combination of coating composition having low surface tension with sponge roller having small pore diameter

Formation of liquid film

As described in Table 4, by using the roller 2 having the average pore diameter of 50 $\mu$m, the liquid film 11 of the sample 11 was formed. The application amount of the composition to be practically coated on the surface of the substrate per one application was adjusted to 7.75 g/m$^2$. This amount is almost the same as the amount in the sample 2 formed by using the same roller 2. On the other hand, in the sample 11, the aqueous coating composition 4 having a lower surface tension than that of the aqueous coating composition 1 used in the sample 2 is used. The surface tension of the aqueous coating composition 4 was 30 mN/m.

<Formation of film>

The substrate on which the liquid film 11 were formed was allowed to stand horizontally, and it was dried naturally until a sufficiently dry state to form the film 11.

Evaluation

Evaluation of the appearance

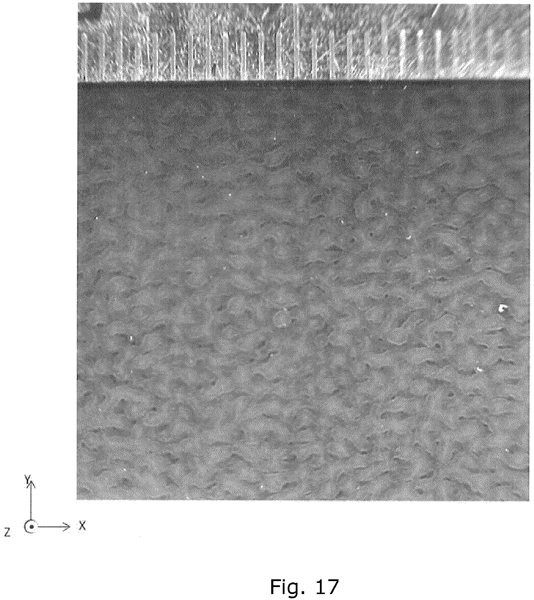

The liquid film 2 formed by using the aqueous coating composition 1 whose surface tension was 58 mN/m had a scale-like concave-convex shape. On the other hand, the liquid film 11 formed by using the aqueous coating composition 4 whose surface tension was 30 mN/m did not have the scale-like concave-convex shape but had a fine net-like concave-convex shape. This seems because the surface tension of the aqueous coating composition 4 used was so low that the composition was spread out with wetting while the concave-convex shape failed to become the scale-like shape. Namely, it was confirmed that the fine concave-convex shape possessed by the liquid film 11 immediately after application of the composition migrated slightly during drying thereof. The shape of the film 11 was observed by taking the photograph thereof. The image of the film 11 is shown in Fig. 17. In the film 11, the fine net-like concave and convex were disposed uniformly, and an uneven coating was not recognized. The appearance of the film 11 was practically acceptable and thus was judged as C. In the sample 11, drying of the liquid film 11 took a longer time than that of the liquid film 2 did.

Test 4: Test of recoating

Formation of liquid film

As described in Table 4, by using the roller 1 having the average pore diameter of 30 $\mu$m, the composition was applied three times (i.e., repeatedly coated) to the surface of the substrate to form the liquid film 13 of the sample 13. Specifically, the first liquid film was formed by the first application followed by drying thereof to form the first film. Then, the second liquid film was formed by the second application to the first film followed by drying thereof to form the second film. Then, the third liquid film (the liquid film 13) was formed by the third application to the second film. The application amount of the composition to be practically coated on the surface of the substrate per one application was adjusted to in the range of 4 to 5 g/m$^2$. This amount is almost the same as the application amount per one application in the sample 1 formed by using the same roller 1. Meanwhile, the surface tension and the viscosity of the aqueous coating composition 2 used in the sample 13 were almost the same as the surface tension and the viscosity of the aqueous coating composition 1 used in the sample 1.

<Formation of film>

As described above, for each application, the substrate on which the liquid film was formed was allowed to stand horizontally, and it was dried naturally until a sufficiently dry state. This step was repeated for three times to form the film 13. In the sample 13, in each application, the liquid film was dried quickly in about 10 seconds.

Evaluation

Evaluation of the appearance

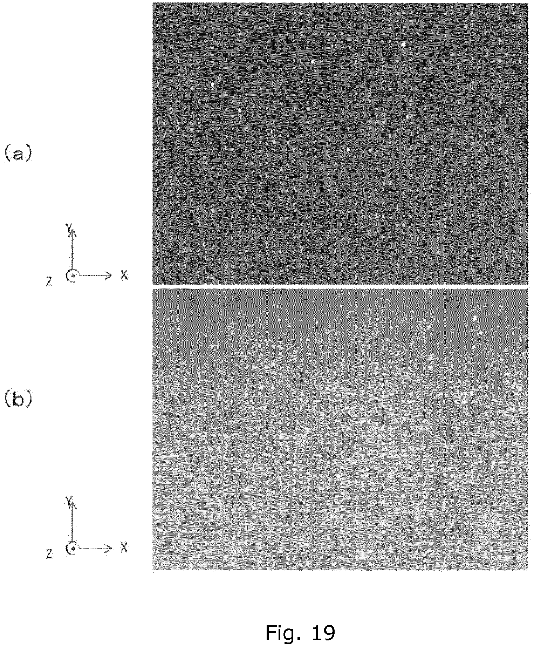

In the liquid film 13, all of the liquid films from the first to the third had the fine scale-like concave-convex shape. The shape of the film 13 was observed by taking the photograph thereof. The image of the film 13 is shown in Fig. 19. It was confirmed that the shape of the film 13 formed by the repeated applications for three times was the scale-like shape. Namely, the scale-like shape possessed by the first film was conserved without disappearance even after the formation of the second film, and likewise, the scale-like shape possessed by the second film was conserved as well without disappearance even after the formation of the third film; and as a result, it was confirmed that the film 13 having the scale-like shape in the state that the fine concave-convex shapes of the first and the second films were piled up was formed even when the application was repeated for three times. In the film 13, an uneven coating was not recognized, and the appearance thereof was very good and thus was judged as A.

[Table 4]

| | Sample No. | Coating composition | | | Roller | | | Film | |
|---|---|---|---|---|---|---|---|---|---|
| | | Kind | Surface tension (mN/m) | Viscosity (mPa·s) | Kind | Application amount (g/m²) | Rolling Yes/No | Shape | Judgement |
| Test 1 | Sample 1 | Composition 1 | 58 | 7.4 | 1 | 5.6 | Yes | Scale | A |
| | Sample 2 | | | | 2 | 7.2 | Yes | Scale | A |
| | Sample 3 | | | | 3 | 5.5 | Yes | Fine net | B |
| | Sample 4 | | | | 4 | 6.9 | Yes | Fine net | C |
| | Sample 5 | | | | 5 | 6.8 | Yes | Net-like with large convex | D |
| | Sample 6 | | | | 6 | 6.5 | Yes | Scale + fine net | B |
| | Sample 7 | | | | 7 | 6.0 | Yes | Net-like with large convex | D |
| | Sample 8 | | | | 8 | 7.3 | Yes | Some large convex | D |
| | Sample 9 | | | | 8 | 7.1 | No | Some large convex | D |
| | Sample 10 | | | | 9 | 8.8 | Yes | Large convex with line | D |
| Test 2 | Sample 11 | Composition 4 | 30 | 7.9 | 2 | 7.8 | Yes | Fine net | C |
| Test 4 | Sample 13 | Composition 2 | 56 | 6.9 | 1 | 5.00→4.25→4.25 | Yes | Scale | A |

Test 5 : Test in which the surface tension of the aqueous coating composition was changed

With regard to the coating compositions 5 to 8 whose surface tensions were changed, the tests were carried out by using the roller 1 having the average pore diameter of 30 $\mu$m and the roller 5 having the average pore diameter of 200 $\mu$m.

Formation of liquid film

As described in Table 5, the liquid films of the samples 14 to 17 were formed by using the roller 1 having the average pore diameter of 30 $\mu$m. Also, the liquid films of the samples 19 to 21 were formed by using the roller 5 having the average pore diameter of 200 $\mu$m. For each of the samples 14 to 17, the application amount of the composition to be practically coated on the surface of the substrate was 8 to 11 g/m$^2$. In each of the samples 19 to 21, the application amount of the composition to be practically coated on the surface of the substrate was 4 to 9 g/m$^2$.

Formation of film

The substrates on which the liquid films 14 to 17 and 19 to 21 were formed were allowed to stand horizontally, and they were dried naturally in the same way as in Test 1 to form the films 14 to 17 and 19 to 21.

Evaluation

Evaluation of the appearance

The states of the films 14 to 17 and 19 to 21 were visually inspected. It was confirmed that when the roller 1 having the average pore diameter of 30 $\mu$m was used, the appearances of the films 14 to 17 were very good or good even if the range of the surface tensions of the aqueous coating compositions to be applied were widely changed from 29 mN/m to 72 mN/m. Specifically, when the surface tension of the aqueous coating composition was high, i.e., 48 mN/m or more, the films 14 to 16 which were free of uneven coating and thus had very good appearances were formed. In these films, the appearances thereof were judged as A. Even when the surface tension of the aqueous coating composition was low, i.e., 29 mN/m, the film 17 which had a fine net-like pattern and had a good appearance was formed. In the film 17, the appearance thereof was judged as B.

On the other hand, when the roller 5 having the average pore diameter of 200 $\mu$m was used, in the samples 19 to 21 having the surface tension of 54 mN/m or less, defects such as an uneven coating and a liquid drip were found.

[Table 5]

| Sample No. | Coating composition | | | Roller | | | | Film | |
|---|---|---|---|---|---|---|---|---|---|
| | Kind | Surface tension (mN/m) | Viscosity (mPa·s) | Kind | Average pore diameter ($\mu$m) | Application amount (g/m$^2$) | Rolling Yes/No | State | Judgement |
| Sample 14 | Composition 5 | 72 | 7.2 | 1 | 30 | 11.4 | Yes | Very good without uneven coating | A |
| Sample 15 | Composition 6 | 54 | 5.4 | | | 10.3 | Yes | Very good without uneven coating | A |
| Sample 16 | Composition 7 | 48 | 8.6 | | | 8.45 | Yes | Very good without uneven coating | A |
| Sample 17 | Composition 8 | 29 | 4.5 | | | 12 | Yes | Good with fine net pattern | B |
| Sample 19 | Composition 6 | 54 | 5.4 | 5 | 200 | 4.85 | Yes | Uneven coating and dripping | D |
| Sample 20 | Composition 7 | 48 | 8.6 | | | 5.3 | Yes | Uneven coating and dripping | D |
| Sample 21 | Composition 8 | 29 | 4.5 | | | 4.25 | Yes | Uneven coating and dripping | D |

Test 6: Test in which the viscosity of the aqueous coating composition was changed

With regard to the coating compositions 6, and 9 to 11 whose viscosities were changed, the tests were carried out by using the roller 1 having the average pore diameter of 30 μm and the roller 5 having the average pore diameter of 200 μm.

Formation of the liquid film

As described in Table 6, by using the roller 1 having the average pore diameter of 30 μm, the liquid films of the samples 15, 22, 24, and 26 were formed. Also, by using the roller 5 having the average pore diameter of 200 μm, the liquid film of the sample 19 was formed. For each of the samples 15, 22, 24, and 26, the application amount of the composition to be practically coated on the surface of the substrate was in the range of 6 to 14 $g/m^2$. For the sample 19, the application amount of the composition to be practically coated on the surface of the substrate was in the range of 2 to 5 $g/m^2$.

Formation of film

The substrates on which the liquid films 15, 19, 22, 24, and 26 were formed were allowed to stand horizontally, and they were dried naturally in the same way as in Test 1 to form the films 15, 19, 22, 24, and 26.

Evaluation

Evaluation of the appearance

The states of the films 15, 19, 22, 24, and 26 were visually inspected. When the roller 1 having the average pore diameter of 30 μm was used, any of the films 15, 22, 24, and 26 was not evaluated to be not good in the appearance thereof even if the range of the viscosities of the aqueous coating compositions to be applied were widely changed from 5.4 mPa·s to 2079 mPa·s. Specifically, when the viscosity of the aqueous coating composition was 185 mPa·s or less, the films 15 and 22 which were free of uneven coating and thus had very good appearances were formed. In these films, the appearances thereof were judged as A. Even when the viscosity of the aqueous coating composition was high, i.e., 684 mPa·s, the film 24 which had a scale-like coating trace and thus had a good appearance was formed. In the film 24, the appearance thereof was judged as B. On the other hand, in the film 26 which was formed with the aqueous coating composition having high viscosity, i.e., 2079 mPa·s, a spot-like uneven coating was recognized faintly. However, the uneven coating recognized in the film 26 was faint so that the appearance thereof was practically acceptable. In the film 26, the appearance thereof was judged as C.

On the other hand, when the roller 5 having the average pore diameter of 200 μm was used, in the film 19 formed with the aqueous coating composition having a low viscosity of 5.4 mPa·s, defects such as an uneven coating and a liquid drip were found. The appearance of the film 19 was not good and thus was judged as D.

[Table 6]

| Sample No. | Coating composition | | | Roller | | | | Film | |
|---|---|---|---|---|---|---|---|---|---|
| | Kind | Surface tension (mN/m) | Viscosity (mPa·s) | Kind | Average pore diameter (μm) | Application amount (g/m$^2$) | Rolling Yes/No | State | Judgement |
| Sample 15 | Composition 6 | 54 | 5.4 | 1 | 30 | 10.3 | Yes | Very good without uneven coating | A |
| Sample 22 | Composition 9 | 54 | 185 | | | 6.65 | Yes | Very good without uneven coating | A |
| Sample 24 | Composition 10 | 53 | 684 | | | 13.9 | Yes | Good with scale-like coating trace | B |
| Sample 26 | Composition 11 | 56 | 2079 | | | 6.35 | Yes | Spot-like uneven coating | C |
| Sample 19 | Composition 6 | 54 | 5.4 | 5 | 200 | 4.85 | Yes | Uneven coating and dripping | D |

Test 7: Test in which the application amount of the composition to be practically coated on the surface of the substrate was changed

The tests were carried out by in which the roller 1 having the average pore diameter of 30 $\mu$m was used and the application amount of the aqueous coating composition 9 to be practically coated on the surface of the substrate was changed.

Formation of liquid film

As described in Table 7, by using the roller 1 having the average pore diameter of 30 $\mu$m, the liquid films of the samples 22 and 28 were formed by applying the aqueous coating composition 9 to the surface of the substrate, while the application amount of the composition to be practically coated thereon per one application (g/m$^2$) was changed.

Formation of film

The substrates on which the liquid films 22 and 28 were formed were allowed to stand horizontally, and they were dried naturally in the same way as in Test 1 to form the films 22 and 28.

<u>Evaluation</u>

Evaluation of the appearance

The states of the films 22 and 28 were visually inspected. When the roller 1 having the average pore diameter of 30 $\mu$m was used, the films 22 and 28 each of which were free of any uneven coating and had a very good appearance were formed. Therefore, the appearances of these films were judged as A.

[Table 7]

| Sample No. | Aqueous coating composition | | | Roller | | | | Film | |
|---|---|---|---|---|---|---|---|---|---|
| | Kind | Surface tension (mN/m) | Viscosity (mPa·s) | Kind | Average pore diameter ($\mu$m) | Application amount (g/m$^2$) | Rolling Yes/no | State | Judgement |
| Sample 28 | 9 | 54 | 185 | 1 | 30 | 4.5 | Yes | Very good without uneven coating | A |
| Sample 22 | | | | | | 6.65 | Yes | Very good without uneven coating | A |

Test 8: Test in which applications were made to exterior wall

Next, examples will be described in which the aqueous coating composition was applied to the surface of an organic painted body of an exterior material by using various rollers.

A slate substrate was painted with an undercoat and an intermediate coat to prepare a painted body. Then, the aqueous coating compositions 12 and 13 were applied to the painted body with various rollers described in Table 8 to form the liquid films 32 to 36 of the samples 32 to 36. The slate substrate having the size of 300 mm $\times$ 200 mm $\times$ 3 mm (t) was used. A two-part epoxy resin paint (SR-50W, manufactured by TOTO Ltd.) was used as the undercoat. A modified silicone resin paint (intermediate coat ECO-EX with the color number of #4000N, manufactured by TOTO Ltd.) was used as the intermediate coat. The aqueous coating composition 12 contains, as the particle components, 10% by mass of the photocatalyst particle 2 and 90% by mass of the inorganic oxide particle 1. The solid concentration thereof was 5.5% by mass. The aqueous coating composition 13 was obtained by concentrating the aqueous coating composition 12 by three folds, and the solid concentration thereof was 16.5% by mass. As described in Table 8, the films 32 to 36 of the samples 32 to 36 were obtained.

In the samples 32 and 33 in which the aqueous coating composition 13 having the 3-folded solid concentration was applied by using the rollers 1 and 6, each having small pore diameter, the liquid films 32 and 33 had a fine concave-convex shape. In the drying step of the liquid films 32 and 33, they were dried quickly in about 10 seconds with conserving the fine concave-convex shape. In the films 32 and 33 thus obtained, a scale-like fine concave-convex shape was formed, and the appearance thereof was very good without any uneven coating recognizable. The appearances of the both films were judged as A.

In the sample 35 in which the aqueous coating composition 12 was repeatedly applied for three times by using the roller 6, similarly to the film 33 of the sample 33 in which the aqueous coating composition 13 having the 3-folded solid concentration was applied by using the same roller 6, the film 35 having the scale-like fine concave-convex shape was obtained. The appearance thereof was very good and thus was judged as A. Meanwhile, the drying time of the liquid film for each application was about 10 seconds.

In the sample 34 in which the aqueous coating composition 13 was applied by using the roller 5 having a large pore diameter, a concave-convex structure was formed in the liquid film 34. Because this concave-convex structure was somewhat large, a part of the convex parts thereof was flowed during the drying step of the liquid film 34, so that an uneven coating was recognized partially in the film 34; but the degree thereof was practically acceptable. The appearance thereof was judged as C. The drying time of the liquid film 34 was somewhat longer than that of the samples 32, 33, and 35, but it was within 1 minute.

In the sample 36 in which the aqueous coating composition 12 was applied by using the wool roller 8, the liquid film 36 was spread out to the entirety of the surface with wetting, so that a concave-convex shape was not formed. The liquid film 36 flowed as drying of it was progressed, and thus, an uneven coating was recognized in the film 36. Drying of the liquid film 36 took about 3 to 5 minutes. The appearance thereof was judged as D.

From the tests mentioned above, it was found that a film having an excellent appearance can be formed on any substrate, regardless of a glass, an exterior wall, and the like, by contriving a combination of a kind of the roller with the coating composition in a similar way as mentioned before.

[Table 8]

| Sample No. | Substrate | Undercoat | Intermediate coat | | | Overcoat | | | | | | | | |
|---|---|---|---|---|---|---|---|---|---|---|---|---|---|---|
| | | | Application amount (g/m2) | | | Aqueous coating composition | | | Roller | | | | Film | |
| | | Application amount (g/m²) | First | Second | Total | Kind | Surface tension (mN/m) | Viscosity (mPa·s) | Kind | Average pore diameter (μm) | Application amount (g/m²) | Rolling Yes/No | State | Judgement |
| Sample 32 | Slate | 152 | 101 | 110 | 211 | 13 | 25 | 15 | 1 | 30μm | 5.5 | Yes | Scale-like | A |
| Sample 33 | | 153 | 103 | 112 | 215 | 13 | 25 | 15 | 6 | 50μm | 6.7 | Yes | Scale-like | A |
| Sample 34 | | 165 | 100 | 102 | 202 | 13 | 25 | 15 | 5 | 200μm | 5 | Yes | Partial uneven coating | C |
| Sample 35 | | 158 | 106 | 95 | 201 | 12 | 25 | 11 | 6 | 50μm | 3.2+3.3+4.0 | Yes | Scale-like | A |
| Sample 36 | | 155 | 101 | 103 | 204 | 12 | 25 | 11 | 8 | 500μm | 11.2 | Yes | Uneven coating | D |

Test 9: Test of measuring surface shape of the film

Formation of liquid film

By using the various application tools described in Table 9, the liquid films of the samples 37 to 46 (i.e., liquid films 37 to 46) were formed by applying the same aqueous coating composition 2 to the surface of the substrate with the application amount of the composition to be practically coated thereon of about 10 g/m$^2$.

Formation of the liquid films 37 to 44 by using the rollers 1 to 5, 8, and 9 were carried out in the following way. The roller was soaked in the coating composition so as to sufficiently impregnate the coating composition to the roller; and then, the roller was squeezed by a squeezing plate such that the amount of the impregnated coating composition might be adjusted to about a half of the initial amount. With closely contacting the roller with the substrate, the roller was rolled reciprocally for two times each in the longitudinal and lateral directions to spread out the coating composition; and, before the liquid film was dried out, the finish coating was made in the longitudinal direction of the substrate. Only the liquid film 44 was formed without rolling the roller. Specifically, the application was made by fixing the roller to a roller handle so that the roller head might not roll. In the liquid film 45 in which a velvet coater (a toll made of sponge whose surface s adhered with a cloth of raised fabric) was used, an appropriate amount of the coating composition was dropped by a dropper on the raised fabric portion of the surface of the substrate, and then, the coater was pressed onto the substrate to spread out the composition for several times; and thereafter, the finish coating was carried out to one direction. In the liquid film 46 in which a spray was used, a low-pressure fogging gun (LPH-101 with the orifice of 1.2 mm, manufactured by Anest Iwata, Corp.) was used. The above-mentioned application amount was secured by spraying repeatedly for three times at a fogging pressure of 0.15 MPa.

Formation of film

The substrates on which the liquid films 37 to 46 were formed were allowed to stand horizontally, and they were dried naturally until a sufficiently dry state to form the films (films 37 to 46) of the samples 37 to 46.

Evaluation

Appearance

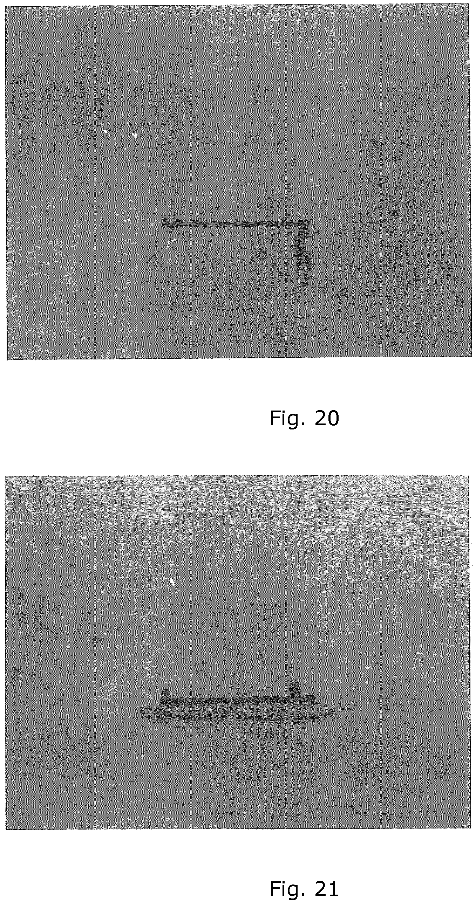

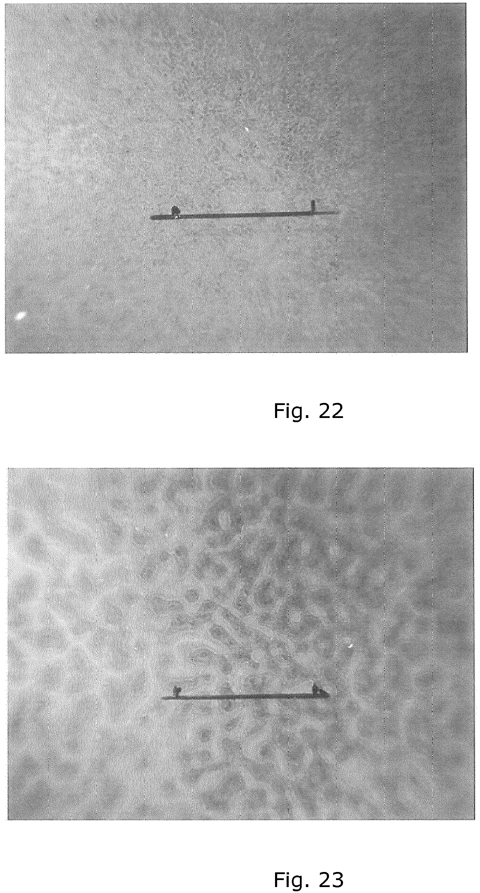

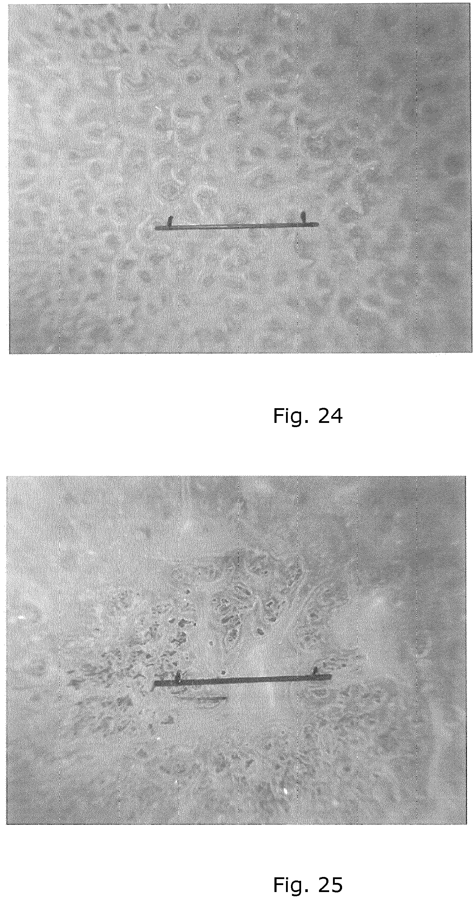

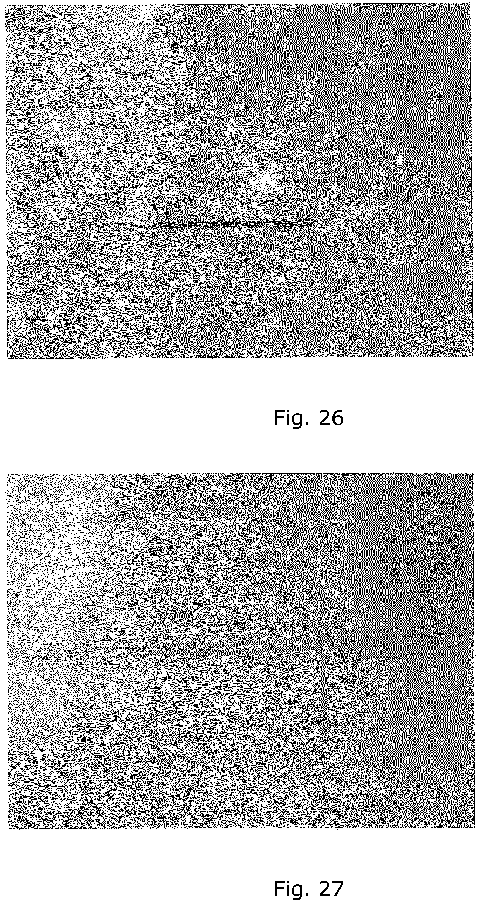

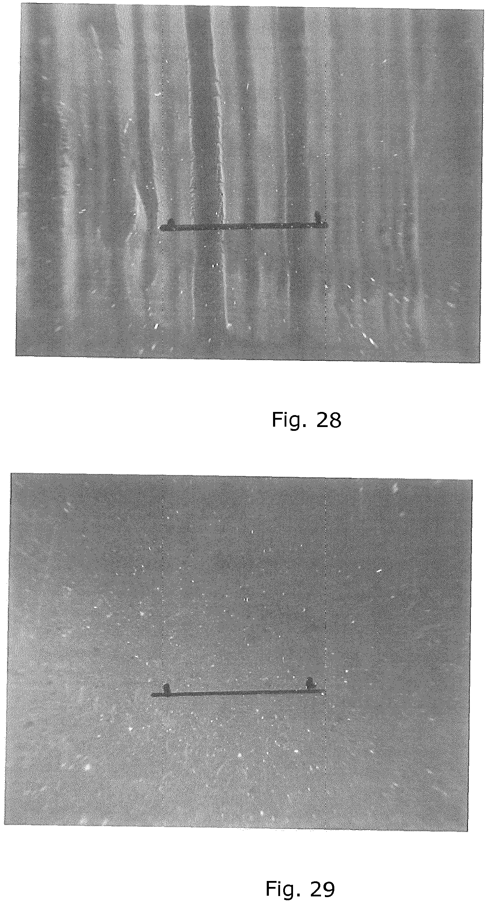

Photographs of the surface shapes of the films 37 to 46 were taken, and visual inspection of each film was made with regard to the presence or absence of an isotropy, namely, whether or not the surface shape is in a state that the fine concave-convex shape is formed regardless of the application direction and that a line-shaped pattern and the like is recognizable, as well as the presence or absence of an uneven coating. The photographic images of the films 37 to 46 are shown in Fig. 20 to 29. Photographs of the films were taken by illuminating the film surface with a white LED from the direction almost horizontal to the film surface, with a black matting plate put in the background of the film, so as to arrange the state that the film pattern can be readily seen. The black line seen in the photograph is a mark drawn by an oil-based felt pen, wherein the distance between two spots on the straight line is 1 cm.

Surface shape profile

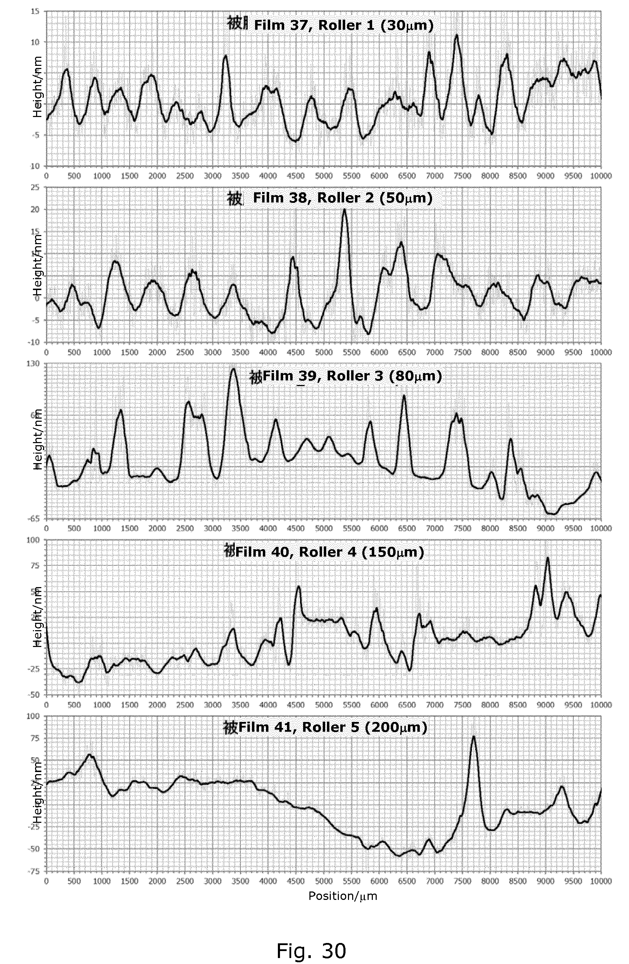

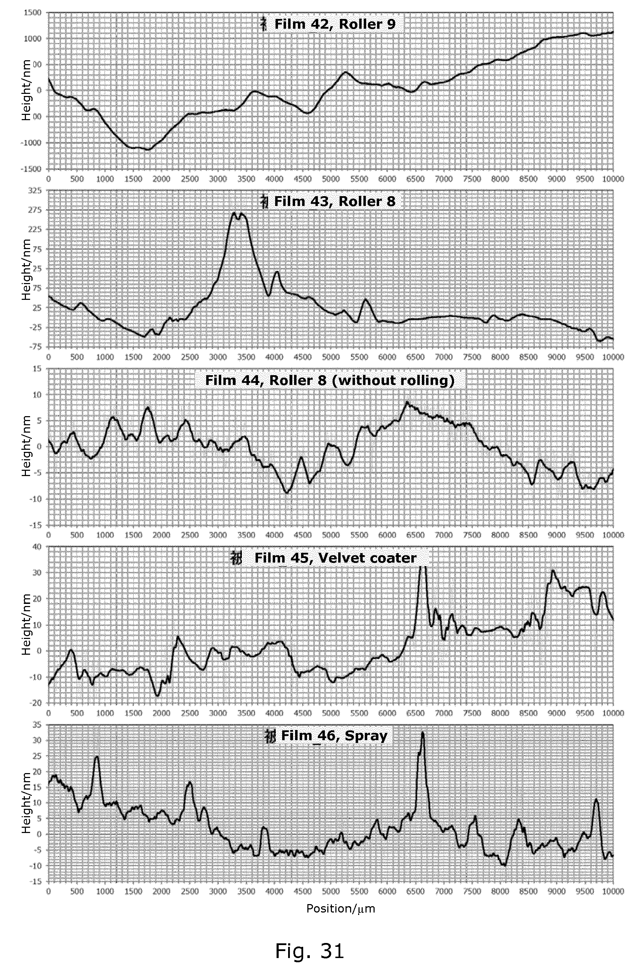

The surface shape of each of the films 37 to 46 was measured with a digital holographic microscope (manufactured by Lyncee Tec SA). The characteristic of the surface shape of each film was quantified by three barometers, i.e., the width of the peak (convex part), the number of peaks per unit length, and the peak height (its ratio relative to the film thickness), for evaluation. For each film, the number of peaks per unit length is shown in Table 9, the evaluation result of the film thicknesses is shown in Table 10, and the overall result is summarized in Table 11. In Fig. 30 and 31, the surface shape profile of each of the films 37 to 46 obtained by the observation with the digital holographic microscope is shown.

In each of the films, the surface shape profile was measured in a 10-mm length (10,000 $\mu$m) in a direction of a right angle to the direction of the finish coating in the step of forming the liquid film. The measurement was made on the line which was 2 mm apart from the mark line drawn by the felt pen. Because the maximum visual field in one shot of the photograph is 1 $\times$ 1 mm, 13 shots of photographs were taken with moving the visual field by 0.8 mm in each shot. On the basis of 13 of the obtained two-dimensional surface shape profile (data of x, y, and the height), the one-dimensional profile (data of x and the height) was extracted. In order to integrate the 13 profiles, the baseline, drift, and position of each profile were corrected so as to integrate into one profile. At this time, with regard to the overlapped part, an average value of the two profile data was taken. Because of a lot of noise in the obtained profile, the 100-points moving average was taken so as to remove the noise. The peak width, the number of the peaks per unit length, and the peak height were measured from the data of the position vs. the height thus obtained, in the ways as described below.

- Peak width: the distance between the two smallest parts (valley) in both sides of a peak was measured. This distance was taken as the peak width.
- Number of peaks: the profile was divided into 4 areas (area 1, area 2, area 3, and area 4, in order), i.e., into the areas of 0 to 2500 $\mu$m, 2500 to 5000 $\mu$m, 5000 to 7500 $\mu$m, and 7500 to 10000 $\mu$m, and the number of the peaks in each area was measured.
- Peak height: a straight line was drawn to connect the two smallest parts obtained in measurement of the peak width, and a perpendicular line was drawn from the summit of the peak to this straight line; and the distance from the peak to the straight line was obtained. Then, the ratio of this distance relative to the film thickness was measured as the peak height. The film thickness was obtained by the method described below. A scar to reach the substrate surface was made by cutting the film of each sample with a cutter knife. This scarred portion was measured with the digital holographic microscope; and from the difference in the heights between the film surface and the substrate surface, the film thickness was obtained.

Result

With regard to the films 37 to 40 formed by using the rollers 1 to 4 having the average pore diameter of in the range of 30 to 150 $\mu$m, both the peak width and the number of the peaks were within the desired ranges (that is, in the range of 300 $\mu$m or more to 500 $\mu$m or less, and in the range of 4 or more to 8 or less per 2.5 mm, respectively), and the film surface had the concave-convex shape which was two-dimensionally uniform or regular. In addition, in the films 37 to 40, the variance in the number of the peaks was small, and as a whole, a uniform and periodic structure was formed. Further, in the films 37 to 40, the concave-convex shape was formed regardless of the application direction, the line-shaped pattern or the like was not recognized, the isotropy was present, and the uneven coating was not recognized; and therefore the appearance was excellent visually. Accordingly, it was confirmed that all of the films 37 to 40 had the fine concave-convex shape. Especially, in the films 37 and 38 which were formed by using the rollers 1 and 2, respectively, not only the concave-convex shape which was two-dimensionally uniform or regular was formed, but also the ratio of the peak height relative to the film thickness was within the desired range (10% or less), and thus the concave-convex shape which was three-dimensionally uniform or regular was formed. Accordingly, it was confirmed that the films 37 and 38 had good fine concave-convex shape. In the films 39 and 40 formed by using the rollers 3 and 4, respectively, having the average pore diameter of in the range of 80 to 150 $\mu$m, the ratio of the peak height was larger than those of the films which were formed by using other application tools, so that it was not within the desired range; however, both the peak width and the number of the peaks were within the desired ranges, and a sufficiently fine concave-convex shape was formed. Meanwhile, when the film had the two-dimensionally good concave-convex shape, this was judged that the film has a sufficiently fine concave-convex shape; and when the film further had the three-dimensionally good concave-convex shape, this was judged that the film has a good fine concave-convex shape.

On the other hand, in the film 41 formed by using the roller 5 having the average pore diameter of 200 $\mu$m, the concave-convex shape was formed regardless of the application direction, the line-shaped pattern and the like were not recognized, and the isotropy was present; however, an uneven coating was outstanding so that the visual appearance was not good. The peak width was within the desired range. However, the number of the peaks was not within the desired range, and the variance of the number was large, and further the aperiodic structure was formed. Accordingly, it was confirmed that the film 41 did not have the fine concave-convex shape. Meanwhile, the peak height was not within the desired range, either.

In the film 42 formed by using the roller 9 which was made of a dry sponge not having the water-absorption property with the average pore diameter of 500 $\mu$m, the concave-convex shape was formed regardless of the application direction, the line-shaped pattern and the like were not recognized, and the isotropy was present; however, an uneven coating was outstanding so that the visual appearance was not good. However, the peak width, the number of the peaks, and the peak height were not within the desired ranges, the variance of the number of the peaks was large, and the aperiodic structure was formed. Accordingly, it was confirmed that the film 42 did not have the fine concave-convex shape.

In the film 43 formed by using the roller 8 which was made of a wool material, the concave-convex shape was formed regardless of the application direction, the line-shaped pattern and the like were not recognized, and the isotropy was present; however, an uneven coating was outstanding so that the visual appearance was not good. The peak width was within the desired range. However, the number of the peaks was not within the desired range, and the variance of the number of the peaks was present, and further the aperiodic structure was formed. Accordingly, it was confirmed that the film 43 did not have the fine concave-convex shape. Meanwhile, the peak height was not within the desired range, either.

In the film 44 formed by using the roller 8, without rolling it, which was made of a wool material, the peak width, the number of the peaks, and the peak height were within the desired ranges; however, a large convex part, which caused to form the line-shaped pattern along the application direction and an uneven coating, was included. Accordingly, it was confirmed that the film 44 did not have the fine concave-convex shape.

In the film 45 formed by using the velvet coater (a toll made of sponge whose surface is adhered with a cloth of raised fabric), the peak width was not within the desired range, and a large convex part, which caused to form the line-shaped pattern along the application direction and an uneven coating, was included. Accordingly, it was confirmed that the film 45 did not have the fine concave-convex shape.

In the film 46 formed by using the spray, the line-shaped pattern and the like were not recognized, and the isotropy was present; however, an uneven coating was outstanding so that the visual appearance was not good. Furthermore, the peak width, the number of the peaks, and the peak height were not within the desired ranges. Accordingly, it was confirmed that the film 46 did not have the fine concave-convex shape.

Consequently, it was confirmed that the surface shapes of the films formed by using the rollers which have the average pore diameter of in the range of 30 $\mu$m or more to 150 $\mu$m or less and have a good water-absorption property, have the isotropy, and further have the peak width, the number of the peaks, and the peak height, each of which is within the desired ranges, and therefore have the fine concave-convex shape, as compared with the surface shapes of the films formed by using the rollers which are made of the same material but have larger average pore diameters than the above range, or by using the rollers not only having larger average pore diameters but also lacking the water-absorption property, or by using other application tools such as the velvet coater and the spray.

[Table 9]

| Sample No. | Application tool | Number of peaks | | | | Average | Variance | Variance |
| | | Area 1 | Area 2 | Area 3 | Area 4 | | | Average |
|---|---|---|---|---|---|---|---|---|
| Sample 37 | Roller 1 | 6 | 6 | 5 | 7 | 6.00 | 0.82 | 13.6% |
| Sample 38 | Roller 2 | 5 | 5 | 5 | 5 | 5.00 | 0.00 | 0.0% |
| Sample 39 | Roller 3 | 5 | 6 | 5 | 7 | 5.75 | 0.96 | 16.7% |
| Sample 40 | Roller 4 | 7 | 5 | 7 | 6 | 6.25 | 0.96 | 15.3% |
| Sample 41 | Roller 5 | 6 | 0 | 3 | 4 | 3.25 | 2.50 | 76.9% |
| Sample 42 | Roller 9 | 3 | 1 | 5 | 5 | 3.50 | 1.91 | 54.7% |
| Sample 43 | Roller 8 | 4 | 4 | 2 | 4 | 3.50 | 1.00 | 28.6% |
| Sample 44 | Roller 8 (without rolling) | 7 | 6 | 5 | 6 | 6.00 | 0.82 | 13.6% |
| Sample 45 | Velvet coater | 9 | 5 | 8 | 9 | 7.75 | 1.89 | 24.4% |
| Sample 46 | Spray | 7 | 9 | 10 | 10 | 9.00 | 1.41 | 15.7% |

[Table 10]

| Sample No. | Application tool | Coating surface | Glass surface | Film thickness |
|---|---|---|---|---|
| Sample 37 | Roller 1 | 2.19 nm | -68.25 nm | 70.44 nm |
| Sample 38 | Roller 2 | 8.61 nm | -123.88 nm | 132.48 nm |
| Sample 39 | Roller 3 | -35.84 nm | -103.02 nm | 67.18 nm |
| Sample 40 | Roller 4 | -9.65 nm | -101.49 nm | 91.85 nm |
| Sample 41 | Roller 5 | 30.36 nm | -102.11 nm | 132.47 nm |
| Sample 42 | Roller 9 | 4.64 nm | -155.89 nm | 160.53 nm |
| Sample 43 | Roller 8 | -3.80 nm | -90.51 nm | 86.71 nm |
| Sample 44 | Roller 8 (without rolling) | 3.47 nm | -31.91 nm | 35.37 nm |
| Sample 45 | Velvet coater | 2.87 nm | -91.63 nm | 94.49 nm |
| Sample 46 | Spray | -2.42 nm | -96.54 nm | 94.12 nm |

EP 3 150 289 A2

## [Table 11]

| Sample No. | Application tool | Peak width | | Number of peaks | | Peak height | | | Appearance (visual) | | |
|---|---|---|---|---|---|---|---|---|---|---|---|
| | | Average | Judgement | Average | Judgement | Average | Ratio (to film thickness) | Judgement | Isotropy Yes/No | Uneven coating Yes/No | Judgement |
| Sample 37 | Roller 1 | 419.6 μm | ○ | 6.00 | ○ | 6.8 μm | 9.6% | ○ | Yes | No | Good |
| Sample 38 | Roller 2 | 491.1 μm | ○ | 5.00 | ○ | 9.8 μm | 7.4% | ○ | Yes | No | Good |
| Sample 39 | Roller 3 | 360.0 μm | ○ | 5.75 | ○ | 53.1 μm | 79.1% | × | Yes | No | Good |
| Sample 40 | Roller 4 | 347.1 μm | ○ | 6.25 | ○ | 35.5 μm | 38.7% | × | Yes | No | Good |
| Sample 41 | Roller 5 | 449.2 μm | ○ | 3.25 | × | 28.5 μm | 21.5% | × | Yes | Yes | Not good |
| Sample 42 | Roller 9 | 531.4 μm | × | 3.50 | × | 176.9 μm | 110.2% | × | Yes | Yes | Not good |
| Sample 43 | Roller 8 | 481.5 μm | ○ | 3.50 | × | 56.5 μm | 65.1% | × | Yes | Yes | Not good |
| Sample 44 | Roller 8 (without rolling) | 342.5 μm | ○ | 6.00 | ○ | 3.2 μm | 9.0% | ○ | No | Yes | Not good |
| Sample 45 | Velvet coater | 295.2 μm | × | 7.75 | ○ | 8.5 μm | 9.0% | ○ | No | Yes | Not good |
| Sample 46 | Spray | 242.4 μm | × | 9.00 | × | 12.8 μm | 13.7% | × | Yes | Yes | Not good |

EXPLANATION OF REFERENCE NUMERALS

101: Liquid film having fine concave-convex shape (immediately after application and before drying)
101a: Convex part constituting the fine concave-convex shape of the liquid film
101b: Concave part constituting the fine concave-convex shape of the liquid film
102: Dry film having fine concave-convex shape of the liquid film conserved in the dry film (after drying)
102a: Convex part constituting the fine concave-convex shape of the dry film
102b: Concave part constituting the fine concave-convex shape of the dry film
201: Liquid film having unfine concave-convex shape (prior art)
201a: Convex part constituting the unfine concave-convex shape of the liquid film
201b: Concave part constituting the unfine concave-convex shape of the liquid film
202: Dry film having unfine concave-convex shape (uneven coating is recognizable on the dry film)
202a: Convex part constituting the unfine concave-convex shape of the dry film (convex part recognizable as uneven coating)
202b: Concave part constituting the unfine concave-convex shape of the dry film (concave part recognizable as uneven coating)

## Claims

1. A method for forming a coating film on a surface of a substrate, comprising the steps of:

   applying an aqueous coating composition to the surface of the substrate to form a liquid film, and
   drying the liquid film to form a dry film, wherein
   the liquid film has a fine concave-convex shape comprising a plurality of convex parts and a plurality of concave parts, and
   in the step of forming the dry film, the liquid film is dried to form the dry film in which the fine concave-convex shape of the liquid film is conserved.

2. The method according to claim 1, wherein the dry film formed with the fine concave-convex shape of the liquid film conserved comprises a scale-like fine concave-convex shape.

3. The method according to claim 2, wherein
   the scale-like fine concave-convex shape has an isotropy, and
   an average peak width in the scale-like fine concave-convex shape is in the range of 300 μm or more to 500 μm or less, and an average peak number per unit length of 2.5 mm in the scale-like fine concave-convex shape is in the range of 4 or more to 8 or less, each of the values is measured from a profile obtained by observing a surface shape of the dry film under a digital holographic microscope.

**4.** The method according to claim 3, wherein
a ratio of a peak height relative to a thickness of the dry film in the scale-like fine concave-convex shape is 10% or less, the ratio is measured from a profile obtained by observing a surface shape of the dry film under a digital holographic microscope.

**5.** The method according to any one of claims 1 to 4, wherein
in the step of forming the liquid film, the aqueous coating composition is applied to the surface of the substrate with a sponge roller to form the liquid film, and
the sponge roller comprises continuous pores which have an average pore diameter of 30 $\mu$m or more to 150 $\mu$m or less and have an ethanol permeation time of 20 seconds or more to 270 seconds or less.

**6.** The method according to claim 5, wherein the viscosity of the aqueous coating composition is in a range of 4.5 mPa·s or more to less than 3000 mPa·s.

**7.** The method according to claim 5 or 6, wherein the surface tension of the aqueous coating composition is in a range of more than 25 mN/m to 72 mN/m or less.

**8.** The method according to any one of claims 1 to 7, wherein in the step of forming the liquid film, an application amount of the aqueous coating composition to the surface of the substrate per one application is in a range of 2 g/m$^2$ or more to 15 g/m$^2$ or less.

**9.** The method according to any one of claims 5 to 8, wherein in the step of forming of the liquid film, the aqueous coating composition is applied to the surface of the substrate to form the liquid film, with the sponge roller being rolled.

**10.** The method according to any one of claims 1 to 9, wherein the aqueous coating composition comprises a functional particle and a dispersion medium mainly comprising water.

**11.** The method according to claim 10, wherein the functional particle is a photocatalyst particle.

**12.** The method according to claim 11, wherein the aqueous coating composition further comprises an inorganic oxide particle other than the photocatalyst particle.

**13.** A functional member comprising a substrate and a coating film formed on a surface of the substrate, wherein the coating film has a fine concave-convex shape comprising a plurality of convex parts and a plurality of concave parts.

**14.** The functional member according to claim 13, wherein the fine concave-convex shape is a scale-like fine concave-convex shape.

**15.** The functional member according to claim 14, wherein
the scale-like fine concave-convex shape has an isotropy, and
an average peak width in the scale-like fine concave-convex shape is in a range of 300 $\mu$m or more to 500 $\mu$m or less, and an average peak number per unit length of 2.5 mm in the scale-like fine concave-convex shape is in a range of 4 or more to 8 or less, each of the values is measured from a profile obtained by observing a surface shape of the dry film under a digital holographic microscope.

**16.** The functional member according to claim 15, wherein a ratio of a peak height relative to a thickness of the dry film in the scale-like fine concave-convex shape is 10% or less, the ratio is measured from a profile obtained by observing a surface shape of the coating film under a digital holographic microscope.

**17.** The functional member according to any one of claims 13 to 16, wherein the coating film comprises a functional particle.

**18.** The functional member according to claim 17, wherein the functional particle is a photocatalyst particle.

**19.** The functional member according to claim 18, wherein the coating film further comprises an inorganic oxide particle other than the photocatalyst particle.

| Process 1 | Formation of a liquid film by applying an aqueous coating composition to a surface of a substrate |
|---|---|

| Process 2 | Formation of a film by drying the liquid film |
|---|---|

Fig. 1

Fig. 2

Fig. 3

Fig. 4a

Fig. 4b

101

Fig. 5a

102

Fig. 5b

Fig. 6a

Fig. 6b

Fig. 7

Fig. 8

Fig. 9

Fig. 10

Fig. 11

Fig. 12

Fig. 13

202a

Fig. 14

Fig. 15

Fig. 16

Fig. 17

Fig. 18

(a)

Y
Z ⊙──→ X

(b)

Y
Z ⊙──→ X

Fig. 19

Fig. 20

Fig. 21

Fig. 22

Fig. 23

Fig. 24

Fig. 25

Fig. 26

Fig. 27

Fig. 28

Fig. 29

Fig. 30

Fig. 31

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 98003607 A
- JP H10337526 A
- JP 2000246115 A